# EUROPEAN PATENT SPECIFICATION

(11) **EP 4 461 560 B1**
(45) Date of publication and mention of the grant of the patent: **11.11.2026**
(21) Application number: 24172919.3
(22) Date of filing: 29.04.2024
(51) Int. Cl.: B60C 1/00, B60C 11/00, B60C 11/03, B60C 11/16

(54) **A STUD FOR A STUDDED TYRE**
SPIKE FÜR EINEN SPIKEREIFEN
CRAMPON POUR PNEUMATIQUE CLOUTÉ

(30) Priority: 08.05.2023 FI 20235512
(43) Date of publication of application: 13.11.2024
(73) Proprietor: Nokian Renkaat Oyj, 37101 Nokia (FI)
(72) Inventor: LIUKKULA, Mikko, 37101 NOKIA (FI); HEIKKINEN, Lauri, 37101 NOKIA (FI)
(74) Representative: Berggren Oy

(56) References cited:
- WO-A1-2014/148262
- WO-A1-2018/001807
- WO-A1-2018/001809
- CA-A1- 3 145 094
- RU-C2- 2 730 803
- RU-C2- 2 748 476
- RU-C2- 2 748 476

## Description

### Technical field

The invention relates to studded tyres. The invention relates to studded pneumatic tyres. The invention relates to studded pneumatic tyres for passenger car vehicles. The invention relates to studs for studded tyres.

### Background

Functions of a tyre on an automotive vehicle include providing sufficient traction for accelerating, driving, and braking; and providing adequate steering control particularly at high speeds. Traction is commonly referred to as grip and steering control as handling. Grip is affected also by the ground on which the tyre is commonly used. Winter tyres, which are intended for icy and snowy (wintry) roads, are commonly equipped with studs to improve grip on ice. However, studded tyres cause more road wear than tyres without studs.

Reduced road wear is beneficial from economic and environmental points of view. Reduced road wear implies that less material will be eroded from the road. Such material will normally fly or drain off the road with air or rainwater. Moreover, reduced road wear implies less maintenance need for the road. Reduced road wear of studded tyre is therefore an important issue of a studded tyre. Naturally, also grip and handling are important characteristics of a studded tyre. A good, studded tyre may be an optimal compromise between these features.

In this field, the documents RU 2748476 C2 and RU 2 730 803 C2 disclose each discloses a tyre containing a tread having a rolling surface, and a set of spikes fixed in the tread and protruding from the rolling surface. An average surface density of the spikes on the rolling surface is at least 6.7 spikes per dm², and a height of a protrusion of each spike is from 0.8 to 1.2 mm.

The document WO 2014/148262 discloses a stud pin and a tire having improved drive performance and braking performance on icy and snowy roads, as well as improved stud-off resistance. The stud pin is provided with a body portion embedded within the tire tread, and a pin portion provided protruding in one end of the body portion and protruding from the surface of the tire tread.

The document CA 3 145 094 relates to an anti-skid stud comprising a stud body with a bottom flange and a stem part extending from the bottom flange, as well as a stud tip fastened to the stud body. The stud tip comprises a zone, whose cross-sectional shape is a variant of an angular polygon.

### Summary

According to a first aspect, which is according to the claimed invention, a stud for a studded tyre is presented, which stud generally does not cause much road wear and still provides good grip. According to a second aspect, a studded tyre having a certain load index and a reduced road wear is presented.

### Brief description of the drawings

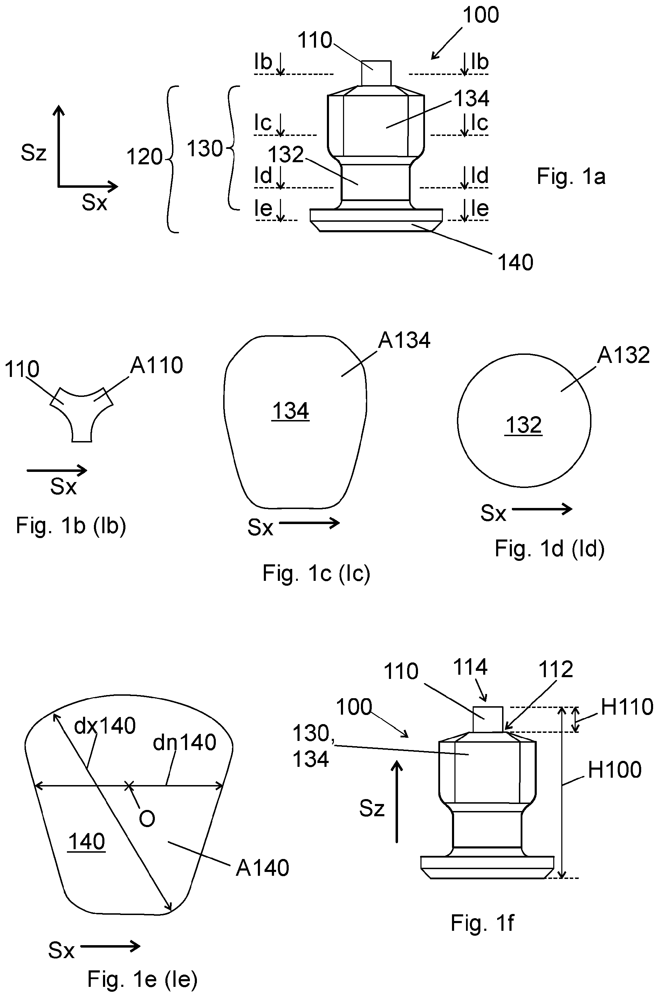

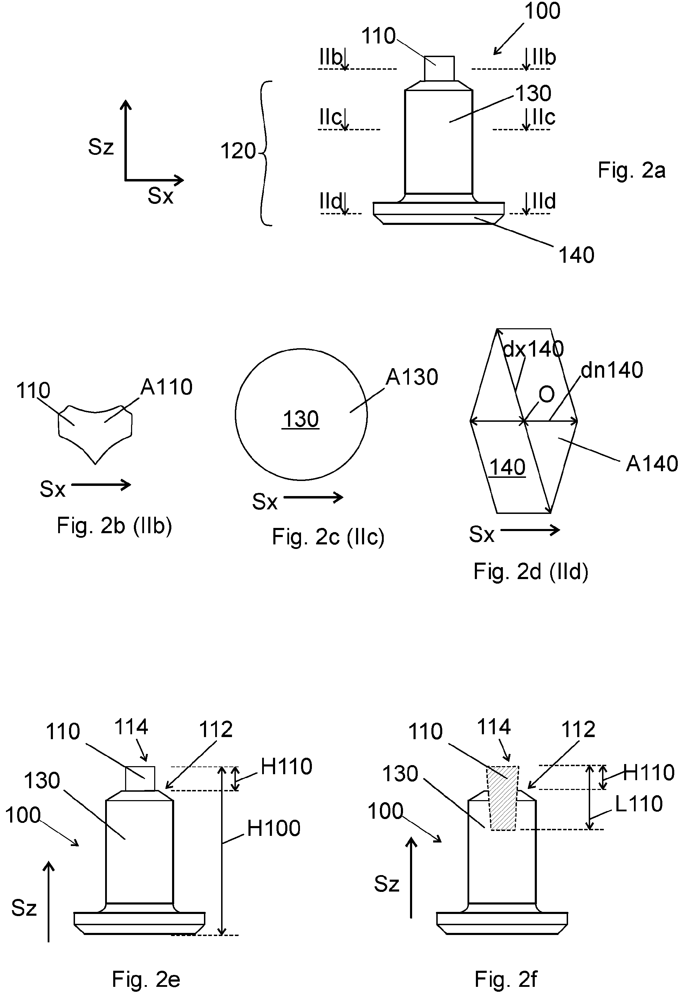

Figs. 1a to 1e and 2a to 2e show different views of studs. The different views/details have been indicated close to the number of the figure. Thus, e.g. Fig. 1b shows the view/detail Ib of Fig. 1a. This is indicated by the reference "(Ib)" near the figure number "Fig. 1b". In line with this, one can see the text "Fig. 1b (Ib)" on the figure page 1/10. Similar notation is used in other figures, too, as detailed below.
- Fig. 1a: shows a stud in a side view,
- Fig. 1b: shows a cross-section Ib of a pin of the stud of Fig. 1a, the cross-section Ib indicated in Fig. 1a,
- Fig. 1c: shows a cross-section Ic of a second flange of the stud of Fig. 1a, the cross-section Ic indicated in Fig. 1a,
- Fig. 1d: shows a cross-section Id of a waist of the stud of Fig. 1a, the cross-section Id indicated in Fig. 1a,
- Fig. 1e: shows a cross-section Ie of a base flange of the stud of Fig. 1a, the cross-section Ie indicated in Fig. 1a,
- Fig. 1f: shows the stud in a side view and further measures thereof,
- Fig. 2a: shows another stud in a side view,
- Fig. 2b: shows a cross-section IIb of a pin of the stud of Fig. 2a, the cross-section IIb indicated in Fig. 2a,
- Fig. 2c: shows a cross-section IIc of a second part of the stud of Fig. 2a, the cross-section IIc indicated in Fig. 2a,
- Fig. 2d: shows a cross-section IId of a base flange of the stud of Fig. 2a, the cross-section IId indicated in Fig. 2a,
- Fig. 2e: shows the stud in a side view and further measures thereof,
- Fig. 2f: shows the stud in a side view and further measures thereof,
- Figs. 3a: to 3d show cross-sections of pins of studs,
- Fig. 4a: shows a stud of a first type in a top view,
- Fig. 4b: shows a stud of a second type in a top view,
- Fig. 4c: shows a part of a tread of a tyre,
- Fig. 5a: shows a tyre in a perspective view,
- Fig. 5b: shows schematically a circumference of a tyre in a side view,
- Fig. 5c: shows a part of a tyre in a perspective view,
- Fig. 5d: shows a half of a cross-section of a tyre with some measures,
- Fig. 5e: shows a quarter of a cross-section of a tyre,
- Fig. 5f: shows a part of a tread of a tyre,
- Fig. 6a: shows an upper limit for road wear of a tyre as defined in the standard SFS7503:2022:en as function of a load index LI of a tyre,
- Fig. 6b: shows the load index LI of a tyre as function of a maximum load the tyre can carry,
- Fig. 7a: shows a part of a tread provided with sipes, grooves, and studs,
- Fig. 7b: shows the detail VIIb of Fig. 7a,
- Fig. 7c: shows schematically tread blocks, a groove, a sipe and a stud,
- Fig. 8a: shows schematically a stud arranged on an underlayer and penetrating through a cap,
- Fig. 8b: shows schematically a stud arranged on an underlayer and penetrating through an intermediate layer and a cap,
- Fig. 8c: shows schematically a stud arranged on an underlayer and penetrating through a cap, and
- Fig. 8d: shows schematically a stud arranged on an underlayer and penetrating through an intermediate layer and a cap.

### Detailed description

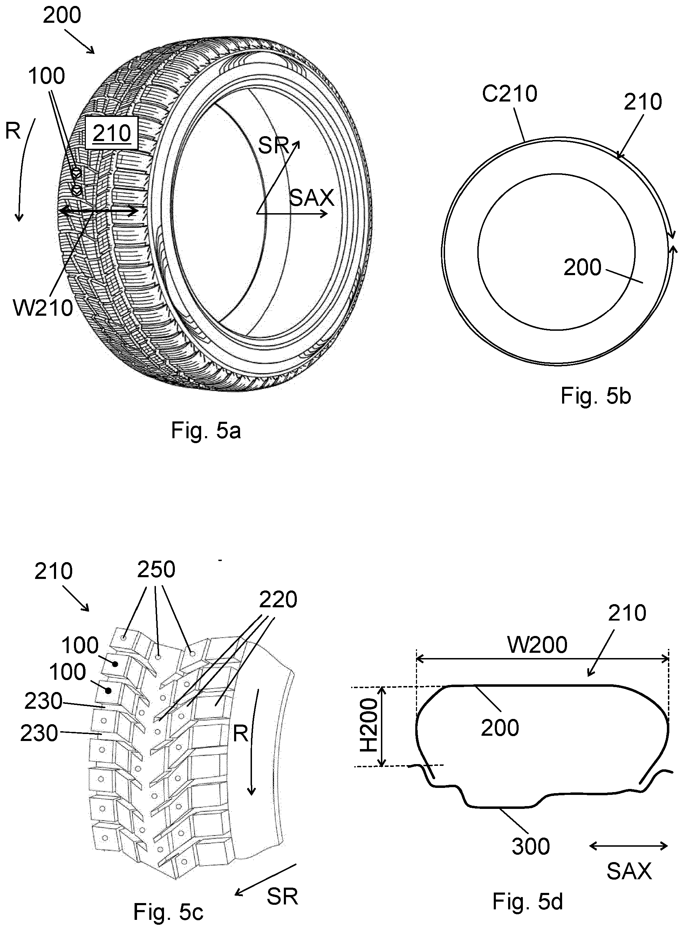

Figure 5a shows a studded tyre 200. A studded tyre 200 comprises a tread 210 and multiple studs 100 provided in the tread 210. Referring to Fig. 5c, the studs 100 have been installed into stud holes 250. The stud holes 250 may be made to the tread 210 during vulcanization of the tread material. The studded tyre 200 is a tubeless tyre, i.e. functional on a rim and without an inner tyre.

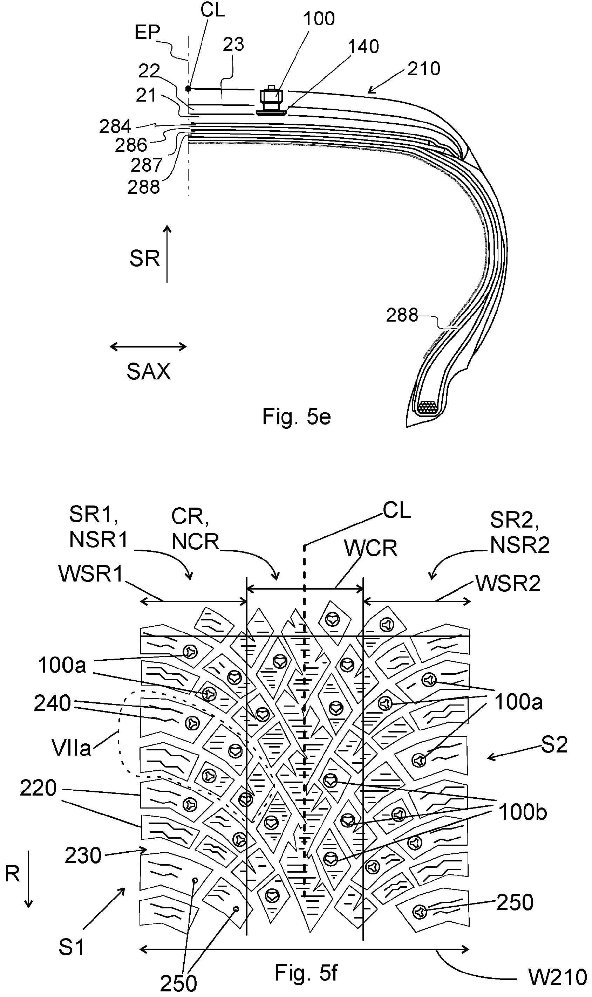

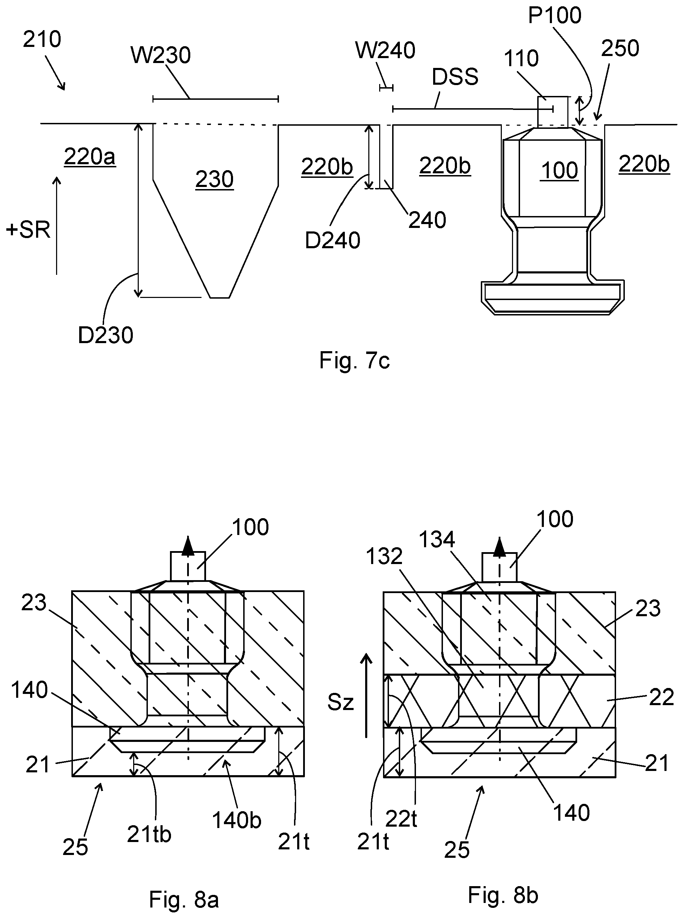

Referring to Figs. 5c and 5f, the tread 210 of the studded tyre 200 is formed by tread blocks 220 such that grooves 230 are arranged between the tread blocks 220. In this description, a "rib" is considered as a large tread block 220. For example, the tread of Figs. 5c and 5f include a central tread block that extends over the entire circumference of the tread, even if such a tread block could be called a central rib. A tread 210 needs not to comprise a tread block that extends circumferentially throughout the tread 210. In addition, the tyre 200 comprises studs 100, which have been installed into at least some of the tread blocks 220. Referring to Figs. 1a and 2a, a stud 100 preferably comprises a pin 110, and preferably each stud 100 of the tyre 200 comprises a pin 100. Moreover, in the tyre 200, at least the pins 110 of the studs 100 are exposed on the tread 210 (see e.g. Fig. 5e). The pins 110 are exposed so that studs have a protrusion P100 of a stud 100 measured from the tread 210. The protrusion P100 is indicated in Fig. 7c. The protrusion P100 is measured in the radial direction +SR and from a planar surface defined by the radially outermost edges of the stud hole 250 into which the stud 100 has been installed. Naturally, the tread 210 itself defines the edges of the stud hole 250.

Some measures of a tyre 200 are depicted in Fig. 5d. Within this description, the width W200 of the tyre 200, as shown in Fig. 5d, refers to the "Section Width" as defined in the Standards Manual 2023 of the European Tyre and Rim Technical Organization (ETRTO). The height H200 of the tyre 200 is also shown in Fig. 5d, and is defined as the "Section Height" in the ETRTO Standards Manual 2023. Correspondingly, the Section Width, i.e. the width W200 of the tyre 200 as defined herein (and in the ETRTO standards manual) is the linear distance between the outsides of the sidewalls of an inflated tyre excluding elevations due to labelling (markings), decoration, or protective bands or ribs. Figure 5d also shows half of a cross-section of a rim 300 onto which the tyre 200 has been installed.

In practice, the tyre width W200 is related to the size marking shown on the tyre 200. In general, the size marking is shown on a tyre as w/hRr, wherein w denotes a width, h an aspect ratio and r a radius. According to the ETRTO standards manual, typical size markings refer to Design Width (i.e. the width W200 of the tyre 200) and an overall diameter as shown in the Table 1 below:

**Table 1: Tyre width and diameter indicated by a size marking of a tyre.**

| **Size** | **Section** | **Overall** | **Size** | **Section** | **Overall** | **Size** | **Section** | **Overall** |
|---|---|---|---|---|---|---|---|---|
| | **Width** | **Diameter** | | **Width** | **Diameter** | | **Width** | **Diameter** |
| | (mm) | (mm) | | (mm) | (mm) | | (mm) | (mm) |
| 145/55R16 | 150 | 566 | 205/55R15 | 214 | 607 | 255/55R16 | 265 | 686 |
| 155/55R14 | 162 | 526 | 205/55R16 | 214 | 632 | 255/55R17 | 265 | 712 |
| 155/55R16 | 162 | 576 | 205/55R17 | 214 | 658 | 255/55R18 | 265 | 737 |
| 165/55R14 | 170 | 538 | 205/55R18 | 214 | 683 | 255/55R19 | 265 | 763 |
| 165/55R15 | 170 | 563 | 205/55R19 | 214 | 709 | 255/55R20 | 265 | 788 |
| 175/55R15 | 182 | 573 | 215/55R16 | 226 | 642 | 255/55R21 | 265 | 813 |
| 175/55R16 | 182 | 598 | 215/55R17 | 226 | 668 | 265/55R18 | 277 | 749 |
| 175/55R17 | 182 | 624 | 215/55R18 | 226 | 693 | 265/55R19 | 277 | 775 |
| 175/55R18 | 182 | 649 | 215/55R19 | 226 | 719 | 265/55R20 | 277 | 800 |
| 175/55R20 | 182 | 700 | 225/55R16 | 233 | 654 | 275/55R15 | 284 | 683 |
| 185/55R14 | 195 | 560 | 225/55R17 | 233 | 680 | 275/55R16 | 284 | 708 |
| 185/55R15 | 195 | 585 | 225/55R18 | 233 | 705 | 275/55R17 | 284 | 734 |
| 185/55R16 | 195 | 610 | 225/55R19 | 233 | 731 | 275/55R18 | 284 | 759 |
| 195/55R15 | 201 | 595 | 235/55R16 | 245 | 664 | 275/55R19 | 284 | 785 |
| 195/55R16 | 201 | 620 | 235/55R17 | 245 | 690 | 275/55R20 | 284 | 810 |
| 195/55R17 | 201 | 646 | 235/55R18 | 245 | 715 | 275/55R21 | 284 | 835 |
| 195/55R18 | 201 | 671 | 235/55R19 | 245 | 741 | 285/55R18 | 297 | 771 |
| 195/55R19 | 201 | 697 | 235/55R20 | 245 | 766 | 285/55R19 | 297 | 797 |
| 195/55R20 | 201 | 722 | 245/55R16 | 253 | 676 | 305/55R20 | 316 | 855 |
| 195/55R21 | 201 | 747 | 245/55R17 | 253 | 702 | 325/55R22 | 336 | 917 |
| | | | 245/55R18 | 253 | 727 | | | |
| | | | 245/55R19 | 253 | 753 | | | |

It is noted that Table 1 shows only some examples. A tyre may have a different size, in particular another aspect ratio than 55.

According to the invention (i.e. the first aspect discussed above), there is provided a stud 100, which improves grip and does not cause much road wear even when used in a studded tyre 200. Such a stud is disclosed in claim 1.

Figures 1a to 1f show a first embodiment of a stud 100 and Figs. 2a to 2f show a second embodiment of a stud. The direction Sz of the figures 1a to 2f is a longitudinal direction of the stud, and the stud may be installed to the tread 210 such that the positive longitudinal direction +Sz is the radially outward direction +SR of the tyre (see e.g. Fig. 5e). A purpose of a stud 100 is to improve grip of a tyre 200 particularly on ice.

Referring to Figs. 1a and 2a, the stud 100 comprises a body 120 and a pin 110. The body 120 comprises a base flange 140 and a second part 130, the second part 130 being joined to the base flange 140 and extending in the longitudinal direction +Sz of the stud 100 from the base flange 140. The pin 110 protrudes from the second part 130 in the longitudinal direction +Sz of the stud 100. The pin 110 comprises hard metal or ceramic. In terms of Vickers hardness, the Vickers hardness of the pin 110 is higher than the Vickers hardness of the second part 130.

As shown in Fig. 1e, the base flange 140 has a first cross-section on a plane that has a normal in the longitudinal direction Sz of the stud, the first cross-section having a first area A140. Moreover, the base flange 140 has a profile shape extending at least a certain distance in the direction Sz of the normal of the first cross-section. Fig. 1e shows the cross-section Ie of the base flange 140 of the stud of Fig. 1a, the cross-section Ie indicated in Fig. 1a. Fig. 2d shows the cross-section IId of the base flange 140 of the stud of Fig. 2a, the cross-section lid indicated in Fig. 2a.

The pin 110 has a second cross-section on a plane that has a normal in the longitudinal direction Sz of the stud 100, the second cross-section having a second area A110. Fig. 1b shows the cross-section Ib of the pin 110 of the stud of Fig. 1a, the cross-section Ib indicated in Fig. 1a. Fig. 2b shows the cross-section IIb of the pin 110 of the stud of Fig. 2a, the cross-section IIb indicated in Fig. 2a. The first area A140 is greater than the second area A110.

To provide a good grip, the pin 110 should protrude from second part 130 sufficiently. A first height H110, which is the height that the pin 110 protrudes from the second part 130 (e.g. from a second flange 134 of the second part 130) is depicted in Figs. 1f and 2e. As shown in Figs. 1f and 2e, the second part 130 extends in the longitudinal direction Sz of the stud 100 from the base flange 140 to an interfacial point 112 between the second part 130 and the pin 110 and does not extend further in this direction. In Fig. 1f, a waist 132 and a second flange 134 constitute the second part 130; however, in Fig. 2e, the second part 130 does not comprise a second flange.

The pin 110 and the second part 130 define the first height H110, which is the length the pin 110 protrudes from the interfacial point 112 in the longitudinal direction Sz to the extremal point 114 of the pin 110 in the longitudinal direction Sz of the stud. Thus, the pin 110 protrudes the first height H110 from the second part 130 of the stud; particularly from the interfacial point 112.

For good grip, the first height H110 should be sufficient. However, if the first height H110 is excessive, the road wear caused by the stud may increase. Moreover, not only the tip 110 affects grip and road wear. Particularly, a size of the base flange 140 affects grip and road wear, too. A large base flange 140 oftentimes implies that the stud 100 is arranged in the stud hole 250 in a stiff manner, i.e. the base flange 140 resists movement of the studs in the negative radial direction -SR when the stud is pressed in this direction. A reason is that the large base flange 140 supports the stud 100 to the rubber material of the tyre beneath the base flange 140 in a sturdy manner. This typically results in a large dynamic impact of the stud on the road; and a high dynamic impact implies high road wear. This applies also vice versa. A small base flange will, in general, reduce the dynamic impact and in this way the road wear. Moreover, as detailed below, the material beneath the base flange also affects the dynamic impact.

It has been found that a good compromise between the grip and the road wear is achieved when a ratio A140/H110 of the first area A140 to the first height H110 is 20 to 50 mm²/mm. This feature characterizes the invention. An even more preferable value for this ratio A140/H110 is 25 to 48 mm²/mm, the most preferably value being 28 to 45 mm²/mm. More details of even more beneficial studs will be provided below.

The stud according to the invention may be used as a stud of a tyre. The stud according to the invention may be used as a stud of another studded tyre, too.

According to the second aspect, a studded tyre has such properties that the tyre, in use, causes only low road wear. Such properties include e.g. the dynamic impact of the studs to the road. The properties may include also the number of the studs, the shape of the studs, and the placement of the studs to the tread. As indicated above also the rubber material to which the studs are installed affects grip and road wear by affecting the dynamic impact of the stud.

Within this description the term tyre refers to a tyre configured to be used on a wheel of a car, especially a passenger car. In line with this, within this description, a road wear of the studded tyre is defined as the road wear in the test specified in the standard SFS7503:2022:en, which concerns primarily tyres designed for vehicles in categories M1 and N1, as defined in the Consolidated Resolution on the Construction of Vehicles (R.E.3), document ECE/TRANS/WP.29/78/Rev.4, para. 2. These categories are:
- M1: Vehicles used for the carriage of passengers and comprising not more than eight seats in addition to the driver's seat, and
- N1: Vehicles used for the carriage of goods and having a maximum mass not exceeding 3.5 tonnes.

The standard SFS7503:2022:en specifies the test procedure in detail. On the general level, in the test, a vehicle equipped with the tyres to be tested is driven over test specimens (i.e. test stones) with specified speed for a specific number of times. The test requires that two identical tyres are tested simultaneously; they are used on one side of the vehicle in the test. According to the standard, a properly loaded vehicle is driven two hundred (200) times over the test stones at the speed of 100 km/h. As both the front and rear wheels pass the test stones, there are a total of four hundred (400) passes of the test tyres over the test stones; and these passes cause the test stones to wear. Road wear according to the standard SFS7503:2022:en is the average weight loss of three test stone rows compensated by the weight loss of reference stones, if applicable. For further details refence is made to the standard. The average wear of test specimens is expressed in units of mass (i.e. in grams). The less the tyres wear the specimens (i.e. test stones), the less is the result (in grams, g) of the test, and thus the less the tyres wear a regular road, too.

According to the second aspect, a tyre 200 comprises a tread 210 and multiple studs 100 in the tread 210. The studs 100 comprise pins 110 of hard metal or ceramic. What has been said above about the hardness of the pin applies. The studs 100 are arranged to the tread 210 such that at least the pins 110 of the studs 100 are exposed on the tread 210. The tyre 200, in particular the studs 100 thereof, are configured such that a road wear of the tyre 200 as measured according to the standard SFS7503:2022:en is low. In particular, the road wear of the tyre is low with respect to the load that the tyre can carry. In general, tyres that can carry a larger load also wear the road more extensively; and vice versa. In particular, in the road wear test of the standard, the vehicle is loaded so that a certain percentage of the maximum load the tyres can carry is reached.

How much load the tyre can carry is generally expressed as a load index LI of the tyre. The load index LI in this description is defined in an identical way as in the standards manual 2023 of the European Tyre and Rim Technical Organization (ETRTO). The ETRTO standard manual 2023 defines the load index LI as: "The LOAD INDEX is a numerical code associated with the maximum load a tyre can carry (except for a load at speed above 210 km/h, see page P.7 and P.9 or M.4 respectively for Passenger Cars and Motorcycle Tyres) at the speed indicated by its Speed Symbol under service conditions specified by the tyre manufacturer."

Moreover, the load index LI as a function of the maximum load a tyre can carry is given in table G.7 of the ETRTO standards manual 2023. The values of that table relevant for the present invention are reproduced in Table 2 below.

**Table 2: maximum load a tyre can carry in kgs "max(kg)" and the associated load index "LI".**

| Load | | Load | | Load | | Load | |
|---|---|---|---|---|---|---|---|
| max(kg) | LI | max(kg) | LI | max(kg) | LI | max(kg) | LI |
| 450 | 80 | 600 | 90 | 800 | 100 | 1060 | 110 |
| 462 | 81 | 615 | 91 | 825 | 101 | 1090 | 111 |
| 475 | 82 | 630 | 92 | 850 | 102 | 1120 | 112 |
| 487 | 83 | 650 | 93 | 875 | 103 | 1150 | 113 |
| 500 | 84 | 670 | 94 | 900 | 104 | 1180 | 114 |
| 515 | 85 | 690 | 95 | 925 | 105 | 1215 | 115 |
| 530 | 86 | 710 | 96 | 950 | 106 | 1250 | 116 |
| 545 | 87 | 730 | 97 | 975 | 107 | 1285 | 117 |
| 560 | 88 | 750 | 98 | 1000 | 108 | 1320 | 118 |
| 580 | 89 | 775 | 99 | 1030 | 109 | 1360 | 119 |

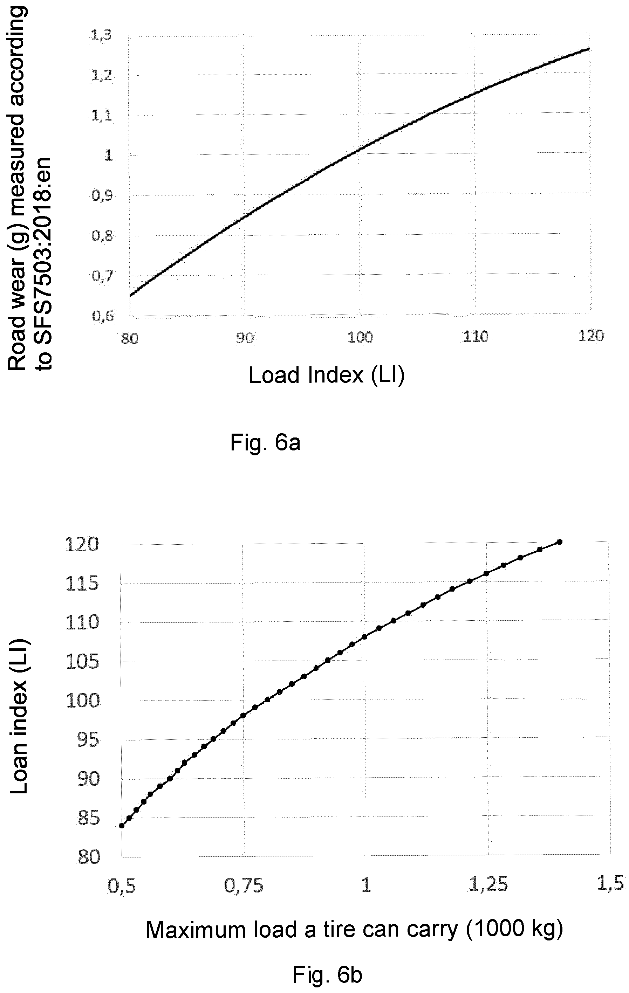

The load index LI as function of the maximum load is also shown in Fig. 6b.

Thus, a tyre 200 according to the second aspect comprises a tread 210 and multiple studs 100 in the tread 210, the studs comprising at least pins 110, such that at least the pins 110 of the studs 100 are exposed on the tread 210. What has been said about the hardness of the pins 110 applies. The tyre 200 is configured such that the load index LI of the tyre 200 as defined in The European Tyre and Rim Technical Organization Standards Manual 2023 table G.7 is from 86 to 116 (i.e. eighty six to hundred sixteen). Moreover, the road wear of the tyre 200 as measured according to the standard SFS7503:2022:en is, in unit of grams, less than the value calculatable by the polynomial formula -0.000139×LI²+0.0431×LI-1.90 (hereinafter Formula 1). The symbol × stands for multiplication and the superscript 2 is the exponent of LI, i.e. LI² stands for the multiplication of LI by LI once (i.e. LI×LI). The load index LI is unitless. If the value of the road wear measured by the standard SFS7503:2022:en includes the unit (grams, g) then the same unit (grams, g) should be added to Formula 1.

The value of this formula as function of the load index LI is shown in Fig. 6a. As detailed above, the road wear of the tyre is less than this value according to the second aspect.

In absolute terms, also in a tyre according to the second aspect, the road wear may be less than 1.00 g. It is noted that Formula 1 gives the road wear 1.00 for the load index 99. However, the road wear may be e.g. less than 1.00 g also for greater load indexes. As an example, the load index may be 100 or more even if the road wear is less than 1.00 g. Further specific examples are disclosed as numbered examples in this description.

This may be achieved e.g. by having a sufficiently low dynamic impact of the studs to the road.

The Formula 1 can be used also when several different types of tyres are manufactured.

The low value of road wear may be achieved e.g. by having a sufficiently low dynamic impact of the studs to the road, particularly when driving at the speed indicated in the road wear standard. Features affecting the dynamic impact of the studs to the road include:
- Mass of the stud,
- Protrusion P100 of the stud,
- Area of the base flange 140 (i.e. the first area A140),
- Size and shape of the stud pin 110, and
- The rubber material supporting the base flange 140, the material optionally being comprised by an underlayer 293.

Both the first area A140 and the rubber material supporting the base flange 140 have effect on how sturdly the stud is supported to the rubber material of the tyre.

As for the material of the tyre 200, also the rubber material of the tread 210 affects grip of the tyre and road wear. Thus, in an embodiment, the tread 210 comprises rubber material having a Shore hardness in the range 48 to 59 Sh(A) as measured with durometer type A, at the temperature 23 °C. In an embodiment, the tread 210, in particular the part of the tyre that is configured to contact a road in use, is formed of rubber material having a Shore hardness in the range 48 to 59 Sh(A) as measured with durometer type A, at the temperature 23 °C.

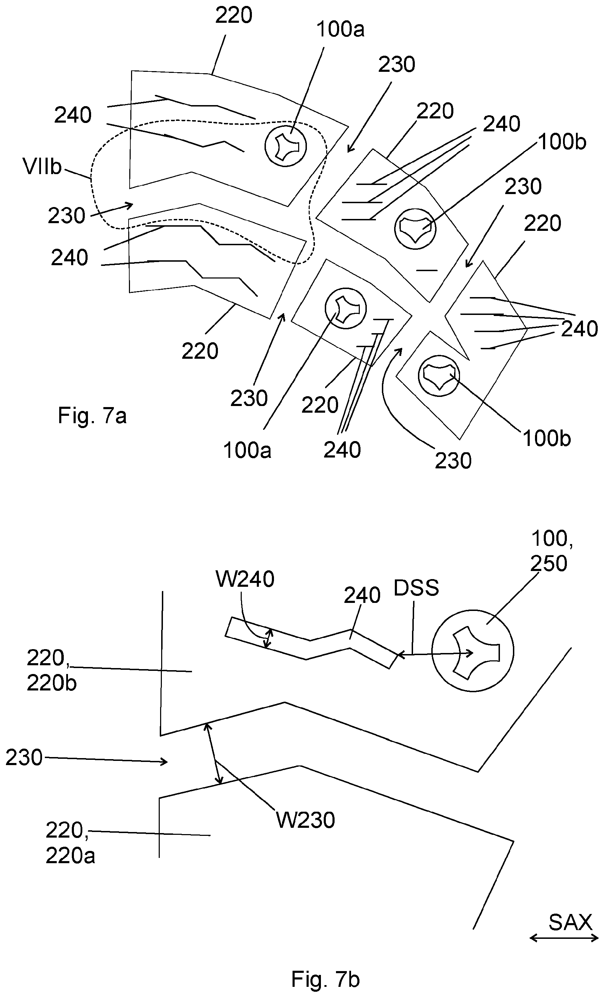

The tread can also be softened by providing sipes 240 to the tread 240. Thus, in an embodiment, at least some of the tread blocks 220 are provided with sipes 240. As well known, sipes 240 are narrow openings in tread blocks 220. Sipes 240 are shown in Figs. 5f, 7a, 7b, and 7c. In this way also the sipes 240 provide improved grip without increasing road wear. Concerning the narrowness of the sipes, in an embodiment, a width W240 of all the sipes 240 is less than 2.0 mm. The width W240 of a sipe is shown in Fig. 7b. In an embodiment, a depth D240 of all the sipes 240 is at least 2.0 mm. A bottom a sipe needs not be even. In such a case the depth of the sipe 240 refers to a depth of the deepest point of the sipe 240.

The tread blocks 220 of the tread 210 also limit grooves 230. Thus, the tread 210 comprises tread blocks 220 such that grooves 230 are arranged between the tread blocks 220. As an example, Fig. 7c shows a groove 230 arranged between a first tread block 220a and a second tread block 220b. In an embodiment, a width W230 of at least one of the grooves 230, as measured on the level of the tread 210 limiting the groove 230, is more than 4.0 mm. The width W230 is shown in Fig. 7c. The grooves may taper radially inward (i.e. in the -SR direction). Thus, in an embodiment, a width W230 of at least one of the grooves 230 decreases in an inward radial direction -SR of the tyre. Reference is made to Fig. 7c. In an embodiment, a depth D230 of at least one of the grooves 230 is more than 6.0 mm, preferably 7 mm to 15 mm. A depth of a sipe 240 is less than a depth of a groove 230. More specifically, in an embodiment, a depth D240 of all the sipes 240 is less than a depth D230 of one of the grooves 230.

When the tyre 200 comprises sipes, preferably, no sipe 240 is provided close to a stud hole 250, in which a stud 100 has been installed. Referring to Fig.7b, a stud 100 has been installed in a stud hole 250, and no part of any of the sipes 240 is arranged closer than the distance DSS to a centre of the stud hole 250. The distance DSS may be 6 mm, 8 mm, or 10 mm. In addition, or alternatively, multiple studs have been installed in multiple stud holes and no part of any of the sipes 240 is arranged closer than 6 mm, 8mm, or 10 mm to a centre of any one of the stud holes 250. Figures 7b and 7c show the distance DSS and that no part of any of the sipes 240 is arranged closer than the distance DSS to a centre of the stud hole 250. The distance DSS may be 6 mm, 8mm, or 10 mm. This has the effect that stud 100 is reliably fixed to its stud hole 250. Otherwise, the sipe 240 would soften the tread also near the stud hole 250 and in this way increase the risk of the stud 100 falling from the stud hole 250. Thus, this also improves the grip of the tyre 200.

However, because the sipes 240 provide for additional grip through effective softening the tread and providing further edges of tread, preferably at least one or some of the sipes are arranged reasonably close to the stud. Thus, in a preferable embodiment, a stud has been installed in a stud hole 250 such that a part of the sipe 240 is arranged closer than 12 mm to a centre of the stud hole 250. More preferably, a stud has been installed in a stud hole 250 such that a part of the sipe 240 is arranged closer than 10 mm (or closer than 9 mm) to a centre of the stud hole 250. Thus, in an embodiment, the tyre comprises such a stud and such a sipe that a distance from a part of the sipe to a centre of the stud hole 250 is, e.g., 6 to 12 mm, 6 to 10 mm, 6 to 9 mm, 8 to 12 mm, 8 to 10 mm, or 8 mm to 9 mm (one significant digit, and in line with the text above, excluding the upper end-points of these ranges but including the lower end-points of these ranges). It is noted that the reference DSS only stands for such a measure that no part of any of the sipes 240 is arranged closer than the distance DSS to a centre of the stud hole 250.

Most preferably, a stud has been installed in a stud hole 250, and no part of any of the sipes 240 is arranged closer than 8 mm to a centre of the stud hole 250 and a part of at least one of the sipes is arranged closer than 10 mm to a centre of the stud hole 250. Preferably this applies to multiple studs so that parts of different sipes may be close to different stud holes. Thus, preferably, at least parts of multiple studs (100, 100a, 100b) are arranged in multiple stud holes 250 provided in multiple tread blocks 220, and no part of any of the sipes 240 is arranged closer than 6 mm (preferably no part is arranged closer than 8 mm) to a centre of any one of the stud holes 250; and the tyre comprises multiple such sipes that a part each one of the multiple sipes 240 is arranged closer than 12 mm (preferably closer than 10 mm) to a centre a stud hole 250 to which a stud has been arranged.

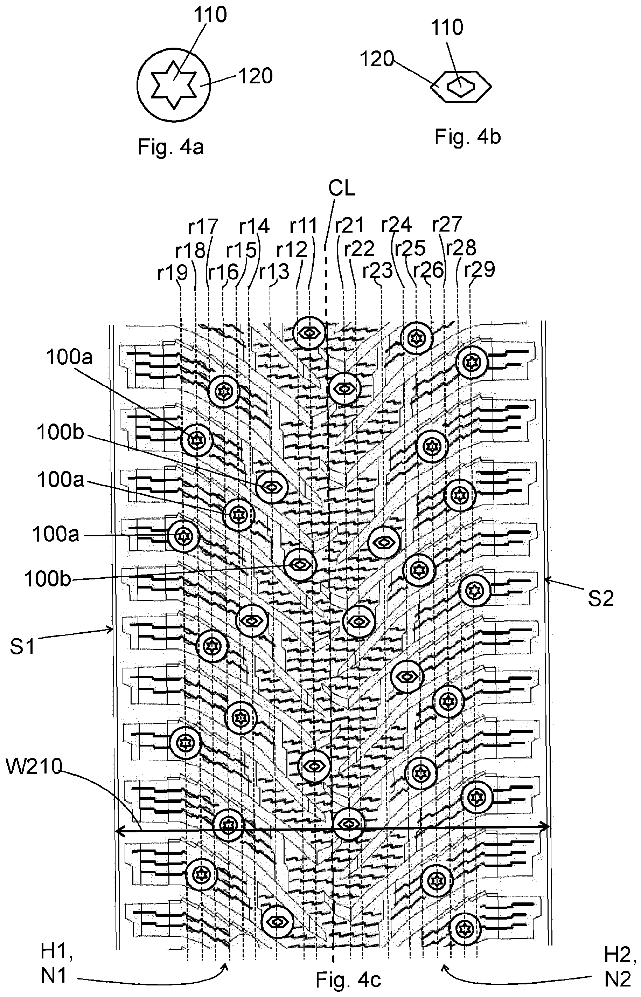

In a preferable embodiment, at least some of the grooves 230 are inclined such that they define a V-shape or a half of a V-shape, the V-shape or the half thereof defining a direction of rotation R of the tyre 200 when used driving forwards, the direction of rotation R being reverse to the direction to which the V-shape or the half thereof opens. As an example, the grooves of Fig. 5a define a half of a V-shape. In contrast the grooves of Figs. 4c, 5c, and 5f define a full V-shape. Such a tread is what is commonly known as "directional" i.e. the tyre is designed to be fitted to the vehicle wheel in one particular way. This improves the grip of the tyre by improving the efficiency of draining water and/or slush from underneath the tyre 200 in regular use of the tyre. This arrangement of grooves also does not increase the road wear. Such a directional tyre may comprise a marking on a sidewall of the tyre, the marking being indicative of the direction of rotation for the tyre.

Such a tyre can be manufactured by vulcanizing a green tyre to form the tyre 200 and forming stud holes to the tread 210 of the tyre 200 during the vulcanizing the green tyre. After vulcanization, the studs 100 are installed to the stud holes 250 of the tread 210. Figure 5f shows two stud holes 250 to which a stud has not been installed. As shown therein, typically the stud holes 250, before the studs 100 have been inserted into the holes 205, are small compared to the studs 100. However, because the tread blocks 220 are elastic, the stud holes 250 are stretched when installing the studs 100 to the holes 250. This further improves fixing of the studs 100 to the stud holes 250. Only one stud hole 250 to which a stud has been installed have shown by reference numeral in Fig. 5f.

When the tyre comprises sipes 240, in an embodiment, the sipes are formed to the tread 210 of the tyre 200 during the vulcanizing the green tyre by using lamella blades.

The stud 100 according to the invention may be used as a stud of a tyre in accordance with the second aspect. The tyre according to the second aspect need not comprise a stud according to the invention.

As detailed above, a sturdiness of the support of the base flange 140 affects the dynamic impact. Thus, for a large impact, the first area A140 (i.e. the area of the cross-section of the base flange 140) should be large; however not too large for not wearing the road too much. Moreover, the dynamic impact is transmitted to the road through the pin. In general, a small pin will cause a higher local impact (in terms of impact per area) to the road. Thus, also the second area A110 (i.e. the area of the cross-section of the pin 110) should be selected suitably. For these reasons, as an example, the tyre according to the second aspect may comprise a stud 100 comprising the base flange 140, the second part 130, and the pin 110 such that a ratio A140/A110 of the first area A140 (i.e. the area of the cross-section of the base flange 140) to the second area A110 (i.e. the area of the cross-section of the pin 110) is 6.5 to 21. Also in the invention, the ratio A140/A110 of the first area A140 (i.e. the area of the cross-section of the base flange 140) to the second area A110 (i.e. the area of the cross-section of the pin 110) is 6.5 to 21. This, optionally in connection with other features affecting the dynamic impact, may provide for the low road wear. In a preferable embodiment, the ratio A140/A110 of the first area A140 to the second area A110 is 7.5 to 19, and more preferably 9 to 17. In absolute terms, preferably, the first area A140 is 20 mm² to 80 mm², more preferably 30 mm² to 70 mm².

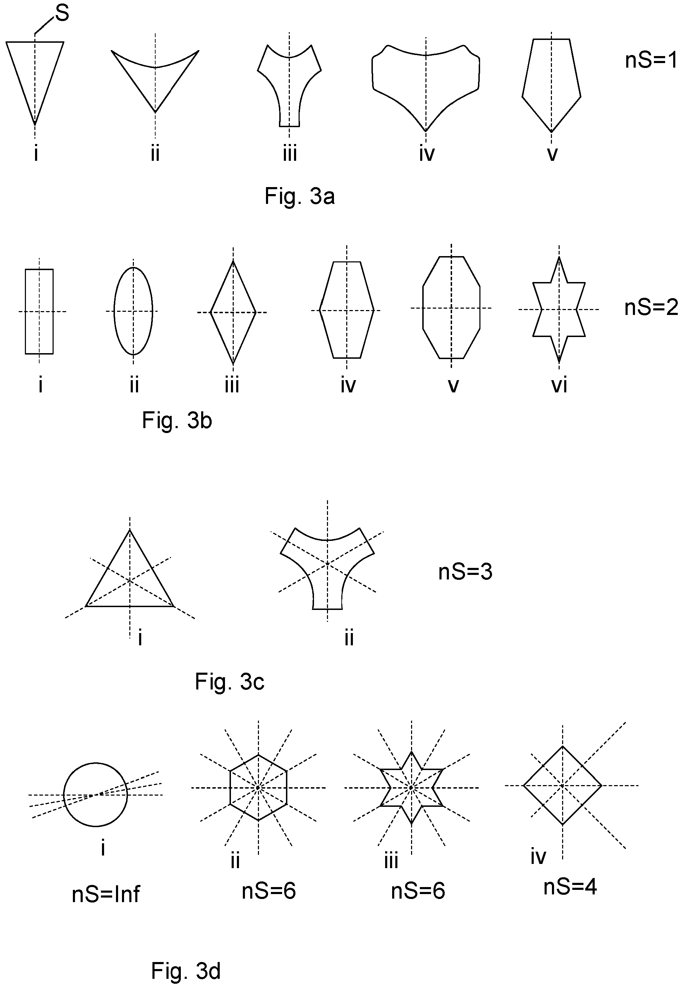

Other features of the stud 100 that are particularly related to the optimal grip and road wear (simultaneously) include the following, each one separately or in combination:
(a) A mass of the stud. In the invention, a mass of the stud 100 is 0.4 g to 3 g. Preferably the mass of the stud 100 is 0.5 g to 1.5 g, most preferably 0.65 g to 1.1 g. Preferably, a mass of the pin 110 of the stud 100 is 0.1 g to 0.8 g, preferably 0.15 g to 0.35 g.
(b) A length of the stud 100. This is related to the structure of the tyre 200, and the fact that by using a sufficiently long stud, the base flange 140 thereof can be arranged to such a part of the tyre 200 that the hardness of the rubber material supporting the base flange 140 is proper. This applies, even if the tread 210 itself was softer or harder. Therefore, in an embodiment, a height H100 of the stud, as measured in the longitudinal direction Sz of the stud 100 is greater than 9.5 mm, preferably 10.0 to 11.0 mm. Reference is made to Figs. 1f and 2e showing the height H100; and to Fig. 5e showing the material with which the base flange 140 of the stud 100 makes a contact.
(c) A shape of the pin 110. The second cross-section of the pin 110 may have various shapes. An example of the second cross-section is shown in Fig. 1b. Another example of the second cross-section is shown in Fig. 2b. Different examples are shown in Figs. 3a to 3d. The second cross-section of the pin 110, the second cross-section being on a plane having normal to the direction Sz of the length of the stud, may be symmetric about one or several axes S of symmetry (the axis of symmetry being part of the plane of the cross-section).

Starting with forms having multiple axes of symmetry, Fig. 3d(i) shows a cross-section of the pin 110, the cross-section being circular. A circle is symmetric about all axes that correspond to a diameter of the circle. Thus, the cross-section of Fig. 3d(i) has infinitely many axes of symmetry. Figures 3d(ii) and 3d(ii) show cross-sections having six axes of symmetry. 3d(ii) shows a shape of a regular hexagon and 3d(iii) shows a star shape with six aisles. Fig. 3d(iv) shows a square, which has four axes of symmetry. The number nS of axes of symmetry S is shown in these figures. In all figures 3a to 3d the axes of symmetry S are shown by dash lines. The reference "S" is shown in Fig. 3a(i) only and denotes an axis of symmetry.

Fig. 3c (both i and ii) show second cross-sections of the tip 110, the second cross-section having three axes of symmetry S (nS=3). Fig 3c(i) shows a triangle and Fig. 3c(ii) shows a star shape with three aisles, each aisle provided with curved edges.

Fig. 3b (i to vi) show second cross-sections of the tip 110, the second cross-section having two axes of symmetry S (nS=2). A basic form for some of these cross-sections is a polygon with an even number of corners, optionally including rounded edges, the shape being stretched in one direction.

Fig. 3a (i to v) show second cross-sections of the tip 110, the second cross-section having one axis of symmetry S (nS=1). A basic form for some of these cross-sections is a polygon with an odd number of corners, optionally including rounded edges, the shape being stretched in one direction.

In the invention, shapes of the tip 110 include such shapes that the second cross-section has one, two, or three (but not more than three) axes of symmetry. Thus, in the invention, the second cross-section has at least one and at most three axes such axes of symmetry S that belong to the plane of the second cross-section. Having one, two or three axes S of symmetry improves the possibilities of optimizing the grip by orienting the stud (e.g. one of the axes of symmetry) relative to the direction of rotation R. Thus, this number of axes S of symmetry is beneficial in combination with the tyre being directional (see above for definition).

While the above features relate to the second aspect, they also relate to embodiments of the invention (i.e. the stud as such).

The studs only function as intended if they remain in the stud holes 250 in use. Thus, good grip of the tyre is related to fixing the studs in a reliable manner to their stud holes 250. Features that are related to the stud 100 being fixed to the stud hole 250 in a reliable way include the following:
(d) Size of the base flange 140. The cross-section of the base flange 140 is preferably greater than a cross-section of the second part 130. Thus, the base flange 140 anchors the stud 100 well to the stud hole. Therefore, in an embodiment, the second part 130 has a third cross-section on a plane that has a normal in the longitudinal direction Sz of the stud 100, the third cross-section having a third area (A130, A132, A134), and the first area A140 is greater than the third area (A130, A132, A134). The third area A130 may correspond to a (sole) third area of the second part as in Figs. 2a and 2c; or the third area A130 may correspond to an area A132 of a cross-section of a waist 132 or an area A134 of a cross-section of a second flange 134.

As detailed in Figs. 1a to 1f in a preferable embodiment, the second part 130 comprises a second flange 134 and a waist 132. The waist 132 connects the base flange 140 to the second flange 134. Moreover, the pin 110 protrudes from the second flange 134 in the longitudinal direction Sz of the stud 100. In this embodiment, also the structure of the second part 130 helps the fixing of the stud 100 to the stud hole 250.

In an embodiment, the waist 132 has the third cross-section on a plane that has a normal in the longitudinal direction of the stud, the third cross-section having the third area A132 as discussed above. Moreover, the second flange 134 has a fourth cross-section on a plane that has a normal in the longitudinal direction of the stud, the fourth cross-section having a fourth area A134. Furthermore, the fourth area A134 is greater than the third area A132.

As for the values of the first area A140 in absolute terms or in relation to a size of the pin 110, reference is made to what has been said above.
(e) Shape of the base flange 140. To enable installing the stud into the stud hole 250 in a reliable manner, an aspect ratio of the cross-section of the base flange 140 should not be excessive. Therefore, in an embodiment, a greatest one-dimensional measure dx140 of the first cross-section is 6.0 mm to 10.5 mm, preferably 7.0 to 10.0 mm and most preferably 7.5 mm to 8.5 mm. The measure dx140 is shown in Figs. 1e and 2d. In case the first cross-section of the base flange 140 would be circular, the greatest one-dimensional measure dx140 would be the diameter. However, typically, the first cross-section of the base flange is not circular. Moreover, in an embodiment, a length dn140 of a shortest straight line that connects an edge of the first cross-section, an opposite other edge of the first cross-section, and a central point O of the first cross-section is 4.5 mm to 9.5 mm, preferably 4.5 mm to 8.5 mm, and most preferably 5.0 to 7.5 mm. A shortest line that connects an edge of the first cross-section, an opposite other edge of the first cross-section, and the central point O of the first cross-section and the length dn140 thereof is shown in Figs. 1e and 2d. The central point O may refer to one of the following:
- a centre of gravity of the first cross-section, the mass of the cross-section being uniformly distributed over the first cross-section,
- a normal projection of a centre of gravity of the stud 100 to the first cross-section, the normal projection being projected in the direction Sz of the length of the stud, or
- a normal projection of a centre of gravity of the pin 110 to the first cross-section, the normal projection being projected in the direction Sz of the length of the stud.

These measures each one separately and some or all in combination ensure that the stud 100 remains well in the stud hole 250 in use, and therefore ensure good grip of the tyre 200.

Further features of the stud as such affecting grip and/or road wear include:
(f) Length of the pin 110. The pin 110 should be fixed to the second part 130 of the stud 100, e.g. to the second flange 134, in a reliable manner. This may be done by inserting a part of the pin 110 into a hole provided in the second part 130. Therefore, in an embodiment, a part of the pin 110 penetrates into the second part 130 (e.g. into the second flange 134 thereof) such that a length L110 of the pin 110 is at least two times or at least three times the height H110 (i.e. L110 ≥ 2×H110 or L110 ≥ 3×H110). Reference is made to Fig. 2f. Even if not shown, the pin may penetrate into the second flange 134 in the embodiment of Figs. 1a to 1f, even if not explicitly shown.

In addition to the stud as such, how the studs are arranged to the tread 210 also affects grip and road wear on the tyre. Such features include:
(g) Protrusion of the stud(s). As detailed above, the protrusion P100 of a stud 100 affects the dynamic impact. Preferably, the protrusion P100 is between 0.6 mm and 2.0 mm, more preferably between 0.7 mm and 1.6 mm, and most preferably between 0.8 mm and 1.4 mm measured from an inflated unused tyre. The protrusion of stud P100 is shown in Fig. 4d. In an embodiment, these values apply to an average of the protrusions P100 of the studs 100 (i.e. all the studs 100) of the tyre. In an embodiment, these values apply to all the protrusions P100 of the studs 100 (i.e. all the studs 100) of the tyre individually.
(h) Type or types of the studs.
(h,i) In an embodiment the tyre 200 comprises multiple studs 100a of a first stud type only. Thus, in an embodiment, all the studs of the tyre 200 are identical in shape.
(h,ii) In an embodiment the tyre 200 comprises multiple studs 100a of a first stud type and multiple studs 100b of a second stud type. Fig. 4c shows a tread 210 to which multiple studs 100a of a first stud type and multiple studs 100b of a second stud type have been installed. For example, the shape of the studs 100a of the first type are shown in Fig. 4a, and the shape of the studs 100b of the second type are shown in Fig. 4b. Also Fig. 5f shows a tread 210 to which multiple studs 100a of a first stud type and multiple studs 100b of a second stud type have been installed.
(i) Placement of the studs in the tread. In Fig. 4e, a central region CR of the tread comprises studs 100b of the second stud type, and both a first shoulder region SR1 and a second shoulder region SR2 comprise studs 100a of the first stud type. Studs 100b of the second type are not identical with the studs 100a of the first stud type. Thus, in an embodiment, a central region CR of the tread 210 is arranged between a first shoulder region SR1 of the tread 210 and a second shoulder region SR2 of the tread 210. The central region CR comprises a circumferential central line CL of the tread 210. In an embodiment, the a circumferential central line CL of the tread 210 divides also the central region to two equally wide parts. The first shoulder region SR1 extends in an axial direction SAX from a first side S1 of the tread 210 towards the circumferential central line CL. A first side S1 is shown in Figs. 4c and 5f. The second shoulder region SR2 extends in an axial direction SAX from a second side S2 of the tread 210 towards the circumferential central line CL. A second side S2 is shown in Figs. 4c and 5f. In an embodiment, the first shoulder region SR1, the second shoulder region SR2 and the central region CR constitute the tread 210. In other words, in the embodiment, the tread 210 consists of the first shoulder region SR1, the second shoulder region SR2 and the central region CR. In accordance with an embodiment, the central region CR has a width which is in a range from 33 % to 49 % of the total width W210 of the tread 210, but may be different from that. Some examples to be mentioned are the range from 35 % to 40 %, or 44 % to 48 %

Moreover, the central region CR comprises studs 100b of the second stud type, and one or both of the first shoulder region SR1 and the second shoulder region SR2 comprise/comprises studs 100a of the first stud type.

In an embodiment, at least two thirds of the studs 100 that are arranged in the central region CR are of the second stud type (they are studs 100b), and at least two thirds of the studs arranged in the first and second shoulder regions SR1, SR2 are of the first stud type (they are studs 100a).

In an embodiment, the studs 100a of the first stud type comprise identical first pins. A cross-section of a first pin, the plane of the cross-section having a normal to the longitudinal direction Sz of the stud, has a first shape. Moreover, the studs 100b of the second stud type comprise identical second pins. A cross-section of a second pin, the plane of the cross-section having a normal to the longitudinal direction Sz of the stud, has a second shape. The second shape is different from the first shape. For example, the pin 110 of the stud 100a of the first type, as shown in Fig. 5f, has the cross-section shown in Fig. 3c(ii), and the pin 110 of the stud 100b of the first type, as shown in Fig. 5f, has the cross-section shown in Fig. 3a(iv). As another example, the pin 110 of the stud 100a of the first type, as shown in Fig. 4c, has the cross-section shown in Fig. 3d(iii), and the pin 110 of the stud 100b of the first type, as shown in Fig. 4c, has the cross-section shown in Fig. 3b(iv).

By using at least two different types of studs, the grip of the tyre can be optimized. This is particularly true, when studs of the second stud type are used in the central region CR, and studs of the first stud type are used in the shoulder regions SR1, SR2.

(j) Amount of studs. The grip of the tyre can be improved by using sufficiently many studs. In an embodiment, the tread 210 has the first width W210 and the first circumference C210, as defined above. The width W210 of the tread 210 is shown at least in Figs. 5a and 5f; and the first circumference C210 is shown at least in Fig. 5b. The first circumference C210 may be measured along the circumferential central line CL. The circumferential central line CL defined above is arranged in an equatorial plane EP of the tyre 200. Moreover, the equatorial plane EP (shown in Fig. 5e) of the tyre 200 divides the tyre to two equally large parts.

Moreover, concerning the number of studs, in an embodiment, the tread 210 is provided with a total number N100 of studs 100. In an embodiment, a ratio (N100/(W210×C210)) of the total number N100 of the studs to the product W210×C210 of the first width W210 and the first circumference C210 is more than 5.6 pieces per square-decimetre (pcs/dm²).

The width W210 of the tread 210 may be somewhat smaller than a width W200 of the tyre. Within this description, the width W200 of the tyre 200, as shown in Fig. 5d, refers to the "Section Width" as defined in the ETRTO standards manual 2023. The height H200 of the tyre 200 is also shown in Fig. 5d, and is defined as the "Section Height" in the ETRTO standards manual 2023. Correspondingly, the Section Width, i.e. the width W200 of the tyre 200 as defined herein (and in the ETRTO standards manual) is the linear distance between the outsides of the sidewalls of an inflated tyre excluding elevations doe to labelling (markings), decoration, or protective bands or ribs. Figure 5d also shows half of a cross-section of a rim 300 onto which the tyre 200 has been installed. As for the circumference C210, the circumference C210 may equal pi (i.e. 3.14) times the overall diameter indicated in Table 1 (see above).

The first width W210 may be equal to the reference tread width as defined in the ETRTO standards manual 2023 (see Design Guide, Page PC.7). In accordance with the definitions therein, the reference tread width C is calculatable as $C = \left(1.075-0.005ar\right) {s}^{1.001}$

Herein s is the Section Width (defined above), i.e. the width W200 of the tyre, and ar is the nominal aspect ratio, which is readable from the size marking w/hRr (see above), the "h" indicating the aspect ratio. Thus, the first width *W210* of the tread 210 may equal the value C as calculatable with the equation given above.

### (k) Distribution of studs.

(k,i) The grip of the tyre can be improved by using sufficiently many studs on both sides of the circumferential central line CL. In an embodiment, the circumferential central line CL of the tread 210 (as well as the equatorial plane EP) defines a first half H1 of the tread 210 and a second half H2 of the tread 210 (see Fig. 4c). In the embodiment, the first half H1 comprises a first number N1 of studs 100, 100a, 100b and the second half H2 comprises a second number N2 of studs 100, 100a, 100b such that a ratio (N1/N2) of the first number to the second number is 90 % to 110 %.

(k,ii) The grip of the tyre can be improved by distributing the studs, in the axial direction SAX more or less evenly on the tread 210. Referring to Fig. 4c, each stud is arranged at a distance from the circumferential central line CL. Thus, each stud defines a circumferential row rij, the circumferential row being parallel to the circumferential central line CL and at such a distance that the stud is arranged on the circumferential row rij. Herein "rij" stands for j:th circumferential row in the i:th half. Fig 4c shows nine rows (j=1, 2, ..., 9) on both halves (i=1 or 2). Several studs may be arranged on the same circumferential row. However, preferably not all the studs of first half of the tread are arranged on the same circumferential row. This applies also for the studs of the second half of the tread. Preferably, studs are arranged on at least six different circumferential rows.

Referring to Fig. 4c, in an embodiment, each one of the multiple studs 100, 100a, 100b of the tyre 200 is arranged on a circumferential row (r11, r12, r13, r14, r15, r16, r17, r18, r19, r21, r22, r23, r24, r25, r26, r27, r28, r29) such that the studs 100, 100a, 100b are arranged on at least six different circumferential rows. Different circumferential rows (r11, r12, r13, r14, r15, r16, r17, r18, r19, r21, r22, r23, r24, r25, r26, r27, r28, r29) are arranged a distance apart from each other, and multiple studs may be arranged on only one circumferential row (r11, r12, r13, r14, r15, r16, r17, r18, r19, r21, r22, r23, r24, r25, r26, r27, r28, r29).

Preferably, the circumferential central line CL of the tread 210 defines the first half of the tread 210 and the second half of the tread 210, and the studs are arranged such that at least three different circumferential rows (r11, r12, r13, r14, r15, r16, r17, r18, r19) of the at least six different circumferential rows (r11, r12, r13, r14, r15, r16, r17, r18, r19, r21, r22, r23, r24, r25, r26, r27, r28, r29) are arranged on the first half, and at least three different circumferential rows (r21, r22, r23, r24, r25, r26, r27, r28, r29) of the at least six different circumferential rows (r11, r12, r13, r14, r15, r16, r17, r18, r19, r21, r22, r23, r24, r25, r26, r27, r28, r29) are arranged on the second half.

Having such many rows rij effective spreads the studs to the tread 210 reasonably evenly, thereby improving the grip.

### (I) structure of a carcass of the tyre.

In addition to the tread 210 of the tyre 200, the structure of the tyre 200 provides for sufficient rigidness of the tyre 200 and thereby also affect the grip and road wear properties of the tyre 200. The tread 210 is provided as an outermost layer of a carcass of the studded tyre 200. A quarter of a cross-section of a tyre 200 is shown in Fig. 5e. The relevant cross-section for Fig. 5e is such a cross-section that is a cross-section of the tyre 200 with a plane that comprises the axis of rotation of the tyre, which is parallel to the axial direction SAX (see Fig. 5a) and located in the centre defined by the tyre 200. Such cross-section has two parts, which are substantially identical. One of such parts is shown in Fig. 5d. A half of only one of the parts is shown in Fig. 5e. An equatorial plane EP (shown in Fig. 2d) of the tyre 200 divides the tyre to two equally large parts. The circumferential central line CL defined above is arranged in the equatorial plane EP.

As detailed above, the tyre comprises the tread blocks 220 that define the grooves 230 and the tread 210, which is an outermost layer of the carcass. Preferably, the carcass of the studded tyre 200 comprises one or more layers of reinforcing textile or textiles and one of more reinforcing metal layers.

In general, a tyre 200 has side surfaces on opposite sides of the tread 210. The side surfaces connect the bead area of the tyre to the tread 210. The side surfaces may have various markings indicating the tyre size, tyre speed class, tyre purpose (winter/summer), tyre manufacturer and/or tyre name. The bead area of a tyre has a cable. The function of the cable and the bead area is to fit the tyre 200 to the rim.

The tyre 200, in particular the carcass thereof, comprises a first ply 288. The ply 288 may comprise fibrous material, e.g. Kevlar, polyamide, carbon fibres, or glass fibres.

The carcass further comprises a first metal belt 287. Preferably, the carcass further comprises a textile belt 284, such as a textile belt 284 comprising fibrous polyamide (e.g. Nylon, aramid, or Cordura). Preferably, the carcass further comprises the textile belt 284 and a second metal belt 286. The metal belt(s) 287, 286 is/are resilient metal belts, such as steel belts comprising wires.

The tread blocks 220 are comprised by a cap layer 23 of the tyre 200. The cap layer 23 may further comprise material connecting the tread blocks 220. Thus, the cap layer 23 forms at least part of a running surface of the tyre. Thus, the cap layer 23 forms at least part of an outer surface of the tread. Under the tread blocks 220 of the tread 210, i.e. under the cap layer 23, the tyre preferably comprises a underlayer 21 made of suitable rubber material. A purpose of the underlayer 21 is to support the studs 100 so that they properly contact the ground in use. The contact is initiated by the dynamic impact detailed above. Thus, in an embodiment, the studs 100 of the tyre 200 are arranged at least partly on the underlayer 21. Thus, the underlayer 21 affects the dynamic impact the studs have on the road.

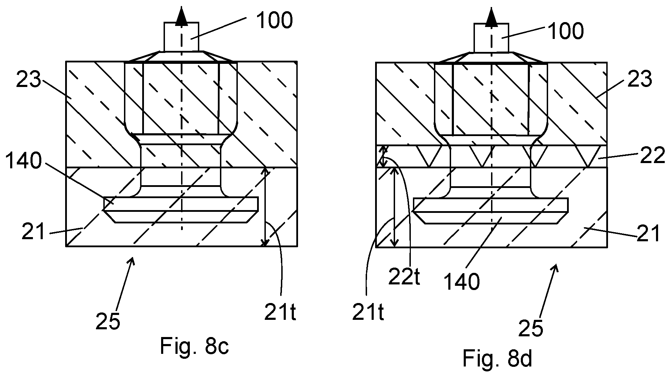

Referring to Figs. 5e, 8a and 8c, in an embodiment the tyre 200 comprises the underlayer 21. The underlayer 21 is made of a first rubber compound. Thus, in an embodiment, the tyre 200 comprises at least one ply 288 at least one metal belt 286, 287, the cap layer 23 forming at least part of a running surface of the tyre, and the underlayer 21 made of a first rubber compound.

The underlayer 21 can be a circumferential layer. The underlayer 21 can be disposed radially outside an outermost belt of the tyre, such as a textile belt 284 or a metal belt 286, 287. If the tyre comprises a textile belt 284, the underlayer 21 can be disposed radially outside the textile belt 284. Technical effect of the textile belt is to restrict expansion from centrifugal forces during driving at high speed as well as improve many properties of the tyre having the underlayer, including improved handling, grip and aquaplaning for the tyre comprising the underlayer. If the outermost belt of the tyre is a metal belt 286, 287, the underlayer 21 can be disposed radially outside the metal belt 286, 287. The underlayer 21 has an inner surface 25 and an outer surface. The outer surface of the underlayer faces the tread 20. The inner surface 25 of the underlayer substantially faces the center of the tyre 200.

By the combined effect of the underlayer 21, the ply 288, and the metal belt or belts (286, 287), the dynamic impact of the studs can be particularly well controlled at different ambient temperatures.

The underlayer 21 is preferably arranged at least partly below the studs 10. Thus, the studs 100 can be placed at least partly above the underlayer 21. Preferably, the underlayer 21 is arranged to be under each of studs of the winter tyre so that the base flange of the stud can be pressed against and retract into the underlayer 21.

The stud 100, preferably the base flange 140 of the stud, can be in direct contact with the underlayer 21. Thus, preferably, there is no other material layer between the stud and the underlayer.

Preferably, at least part of a base flange 140 of a stud is surrounded by the underlayer 21, and at least part of the second flange 134 of the stud is surrounded by the cap layer 23. Technical effect is to support the stud and decrease road wear.

More preferably, also an intermediate layer 22 is used, and at least part of a waist 132 of the stud 100 is surrounded by the intermediate layer 22. Technical effect is to improve stud retention as well as support the stud. More details of the intermediate layer 22 will follow.

The underlayer has an average thickness 21t. The average thickness 21t of the underlayer can be at least 0.5 mm, such as between 0.5 mm and 8 mm, more preferably at least 1.0 mm, and most preferably at least 1.5 mm. Furthermore, the average thickness 21t of the underlayer can be equal to or less than 7 mm, more preferably equal to or less than 6.5 mm, and most preferably equal to or less than 6 mm. The average thickness can be, for example, between 1 mm and 6 mm. Technical effect is that the ice grip properties of the stud can be substantially improved at cold weather, and moreover, the road wear at warm weather can be substantially reduced.

Moreover, the underlayer of the presented thickness can be compressible to reduce road wear, to reduce tyre noise, to improve the driving performance of the tyre as well as to keep the pin of the stud protruded from the tread to provide the tyre with good grip on an icy driving surface.

In an embodiment, the underlayer has a hardness (ShA) between 45 ShA and 65 ShA, determined at an ambient temperature of 22°C according to standard ASTM D2240. Herein (in below) the unit ShA refers to the Shore A hardness, i.e. hardness as determined in the "A" scale of the standard. Technical effect is that the underlayer 21 is able to reduce road wear at 22°C. Preferably, the underlayer has a hardness (ShA) between 45 ShA and 60 ShA, more preferably between 45 ShA and 55 ShA, determined at an ambient temperature of 22°C according to standard ASTM D2240. These values may apply also at 23°C.

Preferably, the tyre has such an underlayer 21 that a hardness of the underlayer varies with the temperature. Technical effect is to decrease the road wear of the studded tyre but still provide desired winter grip properties in spite of the reduced road wear. Hardening/softening of the material may occur at a temperature that can be chracterized by a measuring part of a complex modulus of the material as discussed below. In particular, a position of a tan delta maximum of the material may characterize a temperature at which hardening/softening takes places.

In an embodiment, a position of a tan delta maximum of the underlayer 21 is configured to be between -10°C and +15°C, determined according to ISO 4664-1:2011 in compression. Technical effect is that in warm conditions, the underlayer can substantially soften, whereby the underlayer can allow the stud body to retract into the tread of the tyre, whereby it can reduce the stud's dynamic impact and thereby reduce the wear of the road.

The position of the tan delta maximum refers to the temperature at which tan delta reaches its maximum value. As background, the values of tan delta, as function of temperature, is referred to as a tan delta curve. The values for tan delta curve of this specification are determined as follows: Dynamic Mechanical Thermal Analysis ("DMTA") tests provide information about the small-strain mechanical response of the samples as a function of temperature. Sample specimens can be tested using a commercially available DMTA equipment in compression mode according to the standard ISO 4664-1:2011. The specimen is cooled to -60° C and then heated to 70° C at a rate of 2 °C/min (i.e. 2 K/min) while subjected to an oscillatory deformation and a static strain, the oscillatory deformation having a frequency. Examples of specific values are detailed below. The output of the DMTA test is the storage modulus (E') and the loss modulus (E"), both as function of temperature. The storage modulus indicates the elastic response or the ability of the material to store energy, and the loss modulus indicates the viscous response or the ability of the material to dissipate energy. The ratio of E"/E', called tan delta, gives a measure of the damping ability of the material. As discussed, tan delta depends on temperature. Peaks in tan delta are associated with relaxation modes for the material, such as glass transition. The term "position of tan delta maximum" refers to a temperature in which the maximum value of a tan delta curve is obtained. Thus, "position of tan delta maximum" can be determined, for example, as a position of maximum tan delta value of the tan δ curve.

The tan delta values can be determined from rubber compounds of a tyre as well as from rubber compounds to be used for a tyre, before forming the tyre. The sample has dimensions of diameter 4.5 mm × height 5.0 mm, when determined from a tyre. Further, the sample has dimensions of diameter 10.0 mm × height 10.0 mm, when determined from a rubber compound.

As for the values of oscillatory deformation and a static strain, for example, the following values can be used in the DMTA measurements:
- an oscillatory deformation at 0.6% dynamic strain with 3.0% static strain and a frequency of 10Hz, when using a sample having a diameter of 4.5 mm and a height of 5.0 mm, and

- an oscillatory deformation at 0.05% dynamic strain with 0.2% static strain and a frequency of 10Hz, when using a sample having a diameter of 10.0 mm and a height of 10.0 mm.

The position of a tan delta maximum of the underlayer is thus the temperature at which the tan delta of the underlayer reaches it maximum. Correspondingly, the position of a tan delta maximum of the intermediate layer is the temperature at which the tan delta of the intermediate layer reaches it maximum.

From the DMTA measurements, also the dynamic stiffness (E*) of the material (underlayer of intermediate layer, whichever is tested) can be determined as detailed in the standard ISO 4664-1:2011 in a compression test. The values can be determined from rubber compounds using the procedure disclosed above for tan delta.

The dynamic stiffness of the underlayer, determined at a temperature of 20°C, can be configured to be less than 25 MPa, preferably from 5 to 20 MPa.

The dynamic stiffness (E*, MPa) of the underlayer can be
- lower than 25 MPa at an ambient temperature of 20°C,
- in the range from 25 to 500 MPa, preferably from 40 to 400 MPa, at an ambient temperature of 0°C, and
- at least 500 MPa at an ambient temperature of -30°C.

The change in the dynamic stiffness of the underlayer upon a decrease in the temperature can have a greater impact on the grip of the tyre in winter than the change in the hardness of the material upon a decrease in the temperature. For the above-mentioned dynamic stiffness values, the adjustment of the stud's dynamic impact of the tyre at different temperatures can be more controllable, and the grip properties of the winter tyre can be better optimized for different temperatures. Thanks to the above-mentioned dynamic stiffness, for example the braking distance on an icy road can be substantially reduced.

These properties of the underlayer 21 can be achieved by a proper composition of the material of the underlayer 21.

Preferably, the underlayer 21 contains
- NR (natural rubber) from 0 to 50 phr, preferable from 10 to 40 phr, and/or BR (butadiene rubber) from 0 to 30 phr, preferable from 10 to 20 phr, and/or IR (synthetic isoprene rubber) from 0 to 50 phr, preferable from 10 to 40 phr, so that a total amount of (NR and BR and IR) is from 0 to 70 phr,
- SSBR (solution polymerized styrene-butadiene rubber) from 30 to 100 phr, most preferably from 40 to 70 phr,
- resins from 5 to 40 phr, preferably from 10 to 35 phr, and
- reinforcing fillers from 35 to 80 phr.

A combined amount of carbon black and/or silica (examples of reinforcing fillers) is preferably from 35 to 80 phr, more preferably from 40 to 70 phr.

Technical effect of materials comprising the rubbers comprising at least 30 phr solution polymerized styrene-butadiene rubber together with the reinforcing filler(s) and the resin(s), and preferably also 10 to 70 phr NR, BR, and/or IR, is to provide the desired tan delta curve for the rubber compound.

The underlayer 21 can further contain additives, such as one or more of oils, antidegradants, ZnO, stearic acid, vulcanization chemicals and sulphur.

As discussed, the reinforcing fillers can comprise carbon black, and/or silica.

If the reinforcing fillers comprise silica, silane can be added for improving reinforcing efficiency of the silica. Preferably, a content of the silane is equal to or less than 15% by weight, such as between 5 wt.% and 15 wt.%, determined from total weight of the silica in the underlayer. Technical effect it to provide improved dispersion. Furthermore, silane can form bonds between silica and rubber during the vulcanization.

As discussed, the underlayer 21 preferably contains styrene butadiene rubber which is solution-polymerized styrene butadiene rubber SSBR. The underlayer 21 can comprise at least 30 phr of SSBR. Thus, the content of SSBR in the underlayer 21 can be at least 30 phr, preferably at least 35 phr, more preferably at least 40 phr, and most preferably at least 45 phr. Further, the content of SSBR in the underlayer 21 can be equal to or less than 100 phr, preferably equal to or less than 90 phr, more preferably equal to or less than 80 phr, and still more preferably equal to or less than 70 phr. By using said contents of the solution-polymerized styrene butadiene rubber SSBR, the stiffness can be efficiently adjusted as desired.

Microstructure of SSBR has an effect on properties of the SSBR. When preparing the underlayer, the vinyl content of the solution-polymerized styrene butadiene rubber, is preferably between 33% and 65% by weight, more preferably between 38% and 61% by weight, wherein the vinyl contents are expressed in mol % relative to the butadiene. Furthermore, the styrene content of the styrene butadiene rubber is preferably between 25% and 45% by weight, most preferably between 27% and 40% by weight, wherein the styrene content is expressed in mass % relative to the whole polymer. The contents can be determined by 1H-NMR method in accordance with ISO 21561-1:2015.

This embodiment can provide particularly suitable properties for the underlayer so that stiffening of the underlayer can take place in a controlled manner. Thus, stiffening can take place at a moment determined more precisely in advance.

Preferably, the underlayer contains either NR and SSBR, or BR and SSBR. In these combinations, the technical effect of NR and BR is to improve the elasticity of the underlayer even at cold temperatures. Further, the technical effect of SSBR is to improve stiffness of the mixture.

Thus, advantageously, the underlayer contains
- 10 to 50 phr, most preferable 10 to 40 phr of NR (natural rubber), and
- from 30 phr of SSBR, most preferably from 40 to 70 phr SSBR (solution polymerized styrene-butadiene rubber).

Technical effect of said combination of NR and SSBR is that the position of tan delta maximum can be efficiently adjusted as desired, and hardness of the underlayer can increase at a desired temperature, particularly when used together with the reinforcing fillers and resins according to this specification. Furthermore, thanks to this combination, elasticity of the underlayer can be maintained at cold temperatures, further improving properties of the underlayer.

It is to be noted that the natural rubber NR can be replaced with a synthetic isoprene rubber and still maintain the technical effects of the natural rubber. The synthetic isoprene rubber IR is very much like natural rubber but made synthetically. Thus, from 0 to 100 wt.% of the natural rubber NR can be replaced with the synthetic isoprene rubber IR.

In an embodiment, the underlayer advantageously contains
- 10 to 30 phr, most preferable 10-20 phr of polybutadiene rubber, and
- from 30 phr of SSBR, most preferably from 40 to 70 phr of SSBR (solution polymerized styrene-butadiene rubber).

Technical effect is that properties of the studded tyre having the underlayer can be particularly improved and position of the tan delta maximum of the underlayer can be easily adjusted by using said amounts of polybutadiene rubber and the solution polymerized styrene-butadiene rubber, particularly when used together with the reinforcing fillers and resins according to this specification.

The underlayer 21 can contain reinforcing fillers. A total amount of the reinforcing fillers is preferably more than 30 phr, more preferably at least 33 phr, still more preferably at least 35 phr, and most preferably at least 40 phr, determined from the underlayer 21. Furthermore, the underlayer 21 can comprise equal to or less than 80 phr of reinforcing fillers, preferably equal to or less than 70 phr of reinforcing fillers, still more preferably equal to or less than 60 phr of reinforcing fillers, and most preferably equal to or less than 55 phr of reinforcing fillers. Technical effect of the reinforcing fillers is that the hardness of the underlayer is easier to optimize to a desired level.

The reinforcing fillers are preferably selected from silica and carbon black. The reinforcement may comprise both silica and carbon black. If the reinforcing fillers comprises silica, also silane is preferably added to the mixture. Technical effect of the reinforcing fillers is to improve the strength of the underlayer. Furthermore, the reinforcing fillers can be used to influence the ShA hardness of the underlayer so that the hardness of the underlayer can be more easily optimized to a desired level.

In a non-limiting embodiment, the carbon black is selected from N375 and N234. These carbon blacks are known by a person skilled in the art.

In an embodiment, silica can be selected from: anhydrous silica prepared by dry process and silica prepared by wet process. Among them, hydrous silica prepared by wet process is preferable because it contains a lot of silanol groups.

In a non-limiting embodiment, the silica is selected from high BET and low BET.

Silane coupling agent can be used for silica to be appropriately dispersed during kneading. Preferably, a content of the silane is between 5 wt.% and 15 wt.%, determined from total weight of the silica in the underlayer. Technical effect it to provide improved dispersion. Furthermore, silane can form bonds between silica and rubber during the vulcanization.

The silane coupling agents can be of any type known to those skilled in the art. For example, at least one of bifunctional organosilane and polyorganosiloxane can be used. "Bifunctional" means a compound having a first functional group capable of interacting with silica, e.g., alkoxy, cycloalkoxy or phenoxy group as a leaving group on the silicon atom, and a second functional group capable of interacting with the double bond of elastomer, e.g., -SCN, -SH, -NH2 or -Sx - where x = 2 to 8. The organosilanes can be chosen from the group consisting of polysulphide organosilanes (symmetrical or asymmetrical) such as bis(3-triethoxysilylpropyl) tetrasulphide, abbreviated as TESPT or bis disulphide - (triethoxysilylpropyl), abbreviated as TESPD, polyorganosiloxanes, mercaptosilanes or blocked mercaptosilanes.

The underlayer 21 can contain oil(s). The amount of oils, if used, can be at least 5 phr, more preferably at least 8 phr, and most preferably at least 10 phr. Further, the amount of oils can be equal to or less than 25 phr, preferably equal to or less than 22 phr, and most preferably equal to or less than 20 phr. Technical effect is to increase processability and adjust hardness of the compound.

The oil(s) is/are preferably selected from the group of:
- vegetable oil, such as sunflower oil or rapeseed oil,
- TDAE oil (treated distillate aromatic extract),
- MES oil (mild extracted solvate), and
- RAE oil (residual aromatic extract).

Preferably, said oil contains or consists of at least primarily TDAE oil and/or SRAE oil. Technical effect of oils is to act as process aids and softeners in the manufacturing process.

As discussed, the underlayer 21 can contain one or more resins. A total content of resins is preferably at least 5 phr determined from the underlayer. Technical effect is that the resins can adjust dynamic behavior of the underlayer by shifting and/or broadening the tan delta peak of the rubber compound. Thus, thanks to the resins, position of the tan delta maximum can be adjusted in a cost-efficient and controlled manner to a predetermined temperature range.

A total amount of resins can be at least 5 phr, preferably at least 10 phr, more preferably at least 15 phr, and most preferably at least 17 phr, determined from the underlayer. Further, the total amount of resins can be equal to or less than 40 phr, preferably equal to or less than 35 phr, more preferably equal to or less than 30 phr and most preferably equal to or less than 28 phr, determined from the underlayer. Thus, the total amount of resins can be, for example, 5-40 phr, preferably 10-35 phr, and more preferably 15-30 phr, determined from the underlayer. By applying resin, position of tan delta maximum of the underlayer can be raised by a predetermined level so that the hardening of the underlayer can be implemented within a predetermined temperature range. Another technical effect is that by using the preferably ranges, resins affect the rubber compound by shifting and/or broadening the tan delta peak of the rubber compound as desired.

The resin(s) used for the underlayer can have a glass transition temperature higher than 20 °C, more preferably higher than 30 °C, and most preferably higher than 35 °C. Further, the resin(s) used for the underlayer can have a glass transition temperature of less than 110 °C, preferably less than 85 °C, most preferably less than 70 °C. For example, the resin(s) can have a glass transition temperature from 20 to 100 °C, preferably from 35 to 60 °C. As discussed, Tg for resins can be determined as a peak midpoint by a differential scanning calorimeter (DSC) at a temperature rate of increase of 10°C per minute, according to ASTM D6604 or equivalent.

Preferably, the one or more resins of the underlayer are selected from the following group:
- petroleum hydrocarbon resins,
- aromatic vinyl-based resins,
- phenol-based resins,
- terpene resins,
- terpene phenol resins,
- rosin derived resins and copolymers, and
- mixtures and modifications thereof.

Technical effect is to efficiently adjust the position of tan delta maximum to a desired temperature, i.e., to shift a position of tan delta maximum to a desirable range.

Most preferably, the one or more resins of the underlayer are selected from rosin-based resins, terpene-based resins, and pure monomer C9 resins (PMR), i.e., aromatic resins based on aromatic feedstocks that have been highly purified prior to polymerization, including copolymers of styrene and α-methylstyrene. Technical effect is to shift tan delta peak position to a desirable temperature range more efficiently.

The underlayer can comprise an aromatic resin. Thus, the resin(s) can contain aromatic groups. In an embodiment, the resins contain more than 4 % aromatic groups, more preferably more than 6 % aromatic groups. However, the aromatic content is preferably less than 60%, more preferably equal to or less than 54%.

Advantageously, for adjusting the position of the tan delta peak of the underlayer to a desired temperature range in a controlled and precise manner, the underlayer comprises:
- solution-polymerized styrene butadiene rubber SSBR, and
- polybutadiene rubber and/or natural rubber, and/or synthetic isoprene rubber,
- reinforcing filler(s), and
- resin(s).

The contents of the materials are preferably in the range defined in this specification.

The underlayer 21 can comprise, primarily comprise, or consist of a material whose tan delta maximum is at a temperature of at least -20°C, for example at least -15°C, preferably at least -12°C, more preferably at least -10°C, or at least -8°C, and most preferably at least -5°C. Furthermore, tan delta maximum of said material can be at a temperature of equal to or less than 20°C, for example not higher than 15°C, preferably not higher than 12°C, more preferably not higher than 10°C, or not higher than 8°C, and most preferably not higher than 5°C. Thus, the hardening of the underlayer can be suitable in view of road wear and winter grip. Technical effect of the preferable ranges is that the hardening of the underlayer can take, more accurately, place at a point optimal in view of road wear and winter grip hence, the stud's dynamic impact of the tyre can be controlled easier at different temperatures.

An unvulcanized material of the underlayer can be vulcanized so that sulphur is used as the vulcanizing agent.

As indicate above, the underlayer 21 may be reasonably soft at a high temperature. However, it has been found that a too soft underlayer 21 may not result in optimal handling properties of the tyre. The inventors have found that the handling properties can be, in such a case, improved by using an intermediate layer 22 providing for sufficient rigidness, even if the underlayer 21 is soft. This applies in particular, when the underlayer 21 is made of adaptive material, i.e. material that softens at high temperatures as discussed above. Thus, in an embodiment, the tyre 200 comprises the intermediate layer 22. Moreover, in such an embodiment, the underlayer 21 is arranged, at least partially, under the intermediate layer 22. The intermediate layer 22 can be a circumferential layer.

Figures 8b and 8d show embodiments comprising the intermediate layer 22. The intermediate layer 22 can be arranged between the cap layer 23 and the underlayer 21, at least on locations of the studs. Technical effect is that the intermediate layer improves the stability of the tyre and supports the studs 10 therein when the underlayer is softening. The intermediate layer 22 can support the studs and hence improve driving stability of the tyre on a dry road.

Even if not shown, a part of the intermediate layer 22 may form a part of the cap layer 23. Thus, in an embodiment, the intermediate layer 22, or at least part of the intermediate layer 22, is be placed between the cap layer 23 and the underlayer 21.

An average thickness 22t of the intermediate layer can be at least 0.4 mm, preferably at least 0.5 mm. As for an upper limit, the thickness of the intermediate layer may be at most 7 mm. A preferable range for the thickness is at least 0.6 mm and less than 6.5 mm, more preferably at least 0.7 mm and equal to or less than 6 mm, and most preferably in a range between 0.8 mm and 5 mm. Technical effect is that the intermediate layer can, together with the underlayer, provide the stud with particularly suitable winter grip properties. Thus, the ice grip properties of the tyre can be substantially improved. In addition, properties of the vehicle tyre can be designed as desired more efficiently than in other solutions.

A thickness of the intermediate layer 22, determined at a location wherein the intermediate layer is surrounding a stud, can be at least 0.4 mm and equal to or less than 7 mm, preferably at least 0.5 mm, more preferably at least 0.6 mm and less than 6.5 mm, still more preferably at least 0.7 mm and equal to or less than 6 mm, and most preferably in a range between 0.8 mm and 5 mm. Technical effect is that the intermediate layer can support the stud. Further technical effect is that the intermediate layer can provide particularly suitable handling properties.

The intermediate layer 22 is made of a second rubber compound. In an embodiment, the intermediate layer has a hardness (ShA) between 66 ShA and 80 ShA, determined at an ambient temperature of 22°C according to standard ASTM D2240. Technical effect is that the intermediate layer is able to improve stability of tyres having the underlayer 21. Preferably, the intermediate layer has a hardness (ShA) between 70 ShA and 78 ShA, determined at an ambient temperature of 22°C according to standard ASTM D2240. These values may apply also at the temperature 23°C.

A position of tan delta maximum of the intermediate layer 22 is, in an embodiment, configured to be between -40°C and -70°C (more preferably between -40°C and -60°C), determined according to ISO 4664-1:2011 in compression. Further, preferably, at the same time, a position of a tan delta maximum of the underlayer 21 can be configured to be between -10°C and +15°C (preferably between -5°C and +15°C), determined according to ISO 4664-1:2011 in compression. Thus, when the underlayer substantially softens in warm conditions, the intermediate layer can substantially maintain its stiffness and therefore support the stud and the whole tyre.

The dynamic stiffness of the intermediate layer, determined at a temperature of 20°C, can be configured to be at least 25 MPa, preferably at least 27 MPa, and more preferably from 30 to 100 MPa. Technical effect is to decrease road wear while the intermediate layer supports the whole tyre and the studs of the tyre at the warmer temperature. At the same time, the dynamic stiffness of the underlayer, determined at a temperature of 20°C, can be configured to be less than 25 MPa, preferably from 5 to 20 MPa.

The composition of the intermediate layer 22 affects these properties.

The intermediate layer can comprise or be made of materials selected from a group comprising or consisting of:
- elastomers, for example, SBR, BR, NR,
- fillers, for example silica and/or carbon black, wherein silane is preferably used together with the silica)
- vulcanization chemicals or curing agents, and
- one or more of resins, sulphur, oils, and antidegradants.

In an embodiment, silica may be selected from: anhydrous silica prepared by dry process and silica prepared by wet process. Among them, hydrous silica prepared by wet process is preferable because it contains a lot of silanol groups. Silane coupling agent can be used for silica to be appropriately dispersed during kneading.

If the fillers comprise silica, silane can be added for improving reinforcing efficiency of the silica. Preferably, the content of the silane is equal or less than 15% (such as from 5% to 15%) by weight relative to the amount of silica. Technical effect is to improve dispersion and during the vulcanization silane forms bond between silica and rubber.

The silane coupling agents can be of any type known to those skilled in the art. For example, at least one of bifunctional organosilane and polyorganosiloxane can be used. "Bifunctional" means a compound having a first functional group capable of interacting with silica, e.g., alkoxy, cycloalkoxy or phenoxy group as a leaving group on the silicon atom, and a second functional group capable of interacting with the double bond of elastomer, e.g., -SCN, -SH, -NH2 or -Sx - where x = 2 to 8. The organosilanes can be chosen from the group consisting of polysulphide organosilanes (symmetrical or asymmetrical) such as bis(3-triethoxysilylpropyl) tetrasulphide, abbreviated as TESPT or bis disulphide - (triethoxysilylpropyl), abbreviated as TESPD, polyorganosiloxanes, mercaptosilanes or blocked mercaptosilanes.

Most preferably, the intermediate layer comprises
- SBR between 0 phr and 50 phr, such as 20 phr and 50 phr,
- BR between 0 phr and 50 phr, preferably between 10 phr and 35 phr,
- NR and/or IR between 20 phr and 100 phr, so that a total amount of (BR and NR and IR) is from 50 to 100 phr
- oils between 0 phr and 30 phr,
- resins between 0 phr and 30 phr,
- fillers between 40 phr and 80 phr, preferably the filler(s) is/are selected from carbon blacks and silicas,
- preferably, additives such as, ZnO, stearic acid, vulcanization chemicals and sulphur, and
- optionally, antidegradants.

As discussed, in an embodiment, the intermediate layer is made of an electrically conductive rubber material.

Preferably, the intermediate layer 22 comprises a rubber reinforcing carbon black. Technical effect is to increase stiffness of the intermediate layer while improving electrical conductivity through the tread. The intermediate layer can comprise a rubber reinforcing carbon black content of at least 40 phr, preferably at least 50 phr. Thus, the rubber composition(s) of the intermediate layer 22 can be relatively electrically conductive. Thus, the relatively electrically conductive rubber composition of the intermediate layer can e.g., form a part of the electrically conductive path. Thus, a very small electrical resistance can be obtained through the cap layer.

The intermediate layer 22 can comprise one or more oils. The oil(s) can comprise, for example,
- TDAE oil (treated distillate aromatic extract),
- MES oil (mild extracted solvate),
- RAE oil (residual aromatic extract), and
- vegetable oil, such as sunflower oil or rapeseed oil.

Preferably, the oil(s) are selected from TDAE and SRAE. The oils can act in the manufacturing process as process aids and softeners.

A total amount of the oils in the intermediate layer 22 can be from 0 to 30 phr.

The resin(s) of the intermediate layer can be selected from the following group:
- petroleum hydrocarbon resin,
- aromatic vinyl-based resin,
- phenol-based resin,
- terpene resin,
- terpene phenol resin,
- rosin derived resins and copolymers, and
- mixtures and modifications thereof.

A total amount of the resins in the intermediate layer 22 can be from 0 phr to 30 phr, preferably 2 to 20 phr. Technical effect of resins is fine tuning stiffness properties of the intermediate layer.

Thanks to the underlayer and the intermediate layer, properties of the tyre can be easier to control so that the underlayer can yield to a particularly suitable extent when the ambient temperature rises, which can further reduce wear of the road surface. Further, by the combined technical effect of the intermediate layer and the underlayer, wear of the road surface under non-frozen conditions can be reduced while the underlayer together with the intermediate layer substantially improves winter grip of the tyre on an icy road.

As for the relation of the hardnesses of the underlayer 21 and the intermediate layer 22, in an embodiment, hardness (ShA) of the intermediate layer is configured to be greater than hardness of the underlayer at 22°C. Said difference between the underlayer and the intermediate layer is preferably at least 10%, more preferably from 10% to 60%, and most preferably from 11% to 40% so that underlayer is at least 10% softer than the intermediate layer, determined at 22°C. Technical effect is that the underlayer yields to a suitable extent at said ambient temperature, which reduces wear of the road surface, while the harder intermediate layer supports the tyre.

In an embodiment, the first rubber compound has a first hardness (ShA) and the second rubber compound has a second hardness (ShA), and a hardness (ShA) difference between the first rubber compound and the second rubber compound is at least 15% determined at -25°C so that the second rubber compound is at least 15% softer than the first rubber compound, determined according to standard ASTM D2240 with an exception that the hardness is determined at a temperature of -25°C and the rubber compounds are tempered according to Table 3 of the specification. Technical effect is that the underlayer made of the first rubber compound substantially improves ice grip of the tyre on an icy road.

The hardness (ShA) difference between the underlayer and the intermediate layer at cold temperatures is preferably at least 5%, more preferably from 10% to 60%, still more preferably from 12% to 50%, and most preferably from 15% to 30% so that the underlayer is harder than the intermediate layer, determined at -25°C. Technical effect is that the underlayer and the intermediate layer substantially improves ice grip of the tyre on an icy road.

Accordingly, when measuring the Shore hardness at a temperature which is not disclosed in the standard ASTM D2240; the Shore hardness is measured by first tempering the material to be measured at the reference temperature by keeping the material to be measured at the reference temperature for a time given in Table 3 before the measurements.

**Table 3. Tempering of a sample before hardness measurement.**

| Sample | Temperature (°C) | | | | | | | | | | |
|---|---|---|---|---|---|---|---|---|---|---|---|
| Thick ness (mm) | -50 to less than -40 | -40 to less than -25 | -25 to less than -10 | -10 to less than -5 | -5 to less than 0 | 0 to less than 5 | 5 to less than 10 | 10 to less than 25 | 25 to less than 40 | 40 to less than 60 | 60 |
| | Time (min) to balance | | | | | | | | | | |
| 10 | 45 | 45 | 40 | 35 | 35 | 30 | 35 | 35 | 35 | 35 | 45 |
| 8 | 35 | 35 | 30 | 30 | 30 | 25 | 30 | 30 | 30 | 30 | 35 |
| 5 | 20 | 20 | 20 | 20 | 20 | 15 | 20 | 20 | 20 | 20 | 20 |
| 3 | 15 | 15 | 15 | 15 | 15 | 10 | 10 | 10 | 10 | 10 | 10 |
| 2 | 10 | 10 | 10 | 10 | 10 | 10 | 10 | 10 | 10 | 10 | 10 |

A softer underlayer material can substantially increase the retraction of the stud into the tyre at warmer temperatures and thereby reduce road wear and noise. The greater the difference in hardness of the material at different temperatures, the greater the effect of the underlayer on the grip of the tyre in cold weather and on road wear in warm weather. Thus, the effects of the underlayer can be particularly advantageous for both cold and warm conditions.

The dynamic stiffness of the underlayer, determined at a temperature of 0°C, can be configured to be at least two times the dynamic stiffness of the underlayer at a temperature of 20°C. Further, the dynamic stiffness of the intermediate layer, determined at a temperature of 0°C, can be configured to be from 1 to 1.5 times, preferably from 1.1 to 1.4 times, the dynamic stiffness of the intermediate layer at a temperature of 20°C. Technical effect is that the winter grip properties of the winter tyre can be substantially improved while the intermediate layer supports the whole tyre and the studs of the tyre at warmer temperatures.

The dynamic stiffness of the underlayer can be at least 100% higher, preferably at least 150% higher, than the dynamic stiffness of the intermediate layer at a temperature of 0°C. Technical effect is that the ice grip properties of the winter tyre can be substantially improved at 0°C. The dynamic stiffness of the underlayer may further be equal to or less than 1000 % higher, such as equal to or less than 900% higher, preferably equal to or less than 580% higher than the dynamic stiffness of the intermediate layer at a temperature of 0°C.

Furthermore, the dynamic stiffness of the intermediate layer can be higher than the dynamic stiffness of the underlayer at a temperature of at least 5 °C, such as at a temperature of at least 7 °C. In a particularly advantageous embodiments, the dynamic stiffness of the intermediate layer is higher than the dynamic stiffness of the underlayer at temperatures from 10 °C to 20 °C. Technical effect is to reduce road wear while improving handling properties of the tyre. Further technical effect is that the intermediate layer effectively supports the stud.

The dynamic stiffness of the underlayer at -25°C can be at least 20 times the dynamic stiffness of the underlayer at +20°C. Thus, the grip properties of the winter tyre can be substantially improved, and, for example, the braking distance needed by the winter tyre under certain conditions can be substantially reduced.

It was noted during experimental tests that properties of tyres were particularly improved when the position of tan delta maximum of the underlayer was in a range between 0°C and 10°C, and the position of tan delta maximum of the intermediate layer was less than -30°C. Thus, preferably, the tan delta peak position of the underlayer is in a range between 0°C and 10°C, and the tan delta peak position of the intermediate layer is equal to or less than -30°C.

In a preferred example, for optimizing the grip properties of the tyre in winter,
(A) the hardness (ShA) of the underlayer can be
   - lower than 60 ShA and preferably lower than 55 ShA at 20°C, and
   - preferably at least 60 ShA, more preferably at least 65 ShA, at 0°C, and
   - higher than 75 ShA at -30°C;
   and furthermore,
(B) the dynamic stiffness of the underlayer can be
   - lower than 25 MPa at an ambient temperature of 20°C,
   - between 25 and 500 MPa at an ambient temperature of 0°C, and
   - at least 500 MPa at an ambient temperature of -30°C.

During the experimental tests, it was noted that properties of tyres were particularly improved when a cross point of stiffness curves of the underlayer and the intermediate layer (shown in Fig. 6b) was in a range between +5°C and 20°C, and particularly when the cross point of stiffness curves was in a range between +7°C and 13°C.

Thus, advantageously, a cross point of stiffness curves of the underlayer and the intermediate layer is in a range between +5°C and 20°C, more preferably in a range between +7°C and 13°C.

In an advantageous embodiment, the dynamic stiffness of the underlayer is higher than the dynamic stiffness of the intermediate layer at temperatures of less than 5 °C, but the dynamic stiffness of the intermediate layer is higher than the dynamic stiffness of the underlayer at temperatures from 15 °C to 20 °C. Technical effect is to substantially reduce road wear while improving handling properties of the tyre.

### Experimental

According to the principles laid down above, the inventors manufactured a tyre having the size 215/60R16. A load index LI of the tyre was 99. Reference is made to Table 2. In line with what has been said above, in the tyre, a mass of each one of the studs was 0.9 g, i.e. in the range 0.5 g to 1.5 g. Moreover, an average of the protrusions P100 of the studs from the tread 210 was 1.0 mm, i.e. between 0.7 mm and 1.6 mm. The areas of the stud pin 110 and the base flange 140 were selected such that of the first area A140 was 50 mm² and the second area A110 was 3.5±0.1 mm². Thus, a ratio A140/A110 of the first area A140 (that of the base flange 140) to the second area A110 (that of the pin) was 14.3, i.e. in the range 7.5 to 19. Moreover, the first height H100 (of the pin 110) was selected to be 1.3 mm. Thus, the ratio A140/H110 of the first area A140 to the first height H110 was 38.5 mm²/mm, i.e. in the range 25 to 48 mm²/mm. Furthermore, the tyre comprised an underlayer 21 as discussed above.

A road wear of the tyre was tested according to the standard SFS7503:2022:en. The result was 0.955 g. In line with what has been said above, the Formula -0.000139×LI²+0.0431×LI-1.90 gives the value 0.995 for load index LI that equals 99. Thus, the tested road wear 0.955 (in grams) was 4 % less than the value (in grams) calculatable by the Formula. This shows an example of a tyre according to an embodiment of the second aspect of the invention.

As for the materials of the underlayer 21 and the intermediate layer 22, several studded tyres comprising the underlayer and the intermediate layer according to this specification were manufactured. The amounts of raw materials were as disclosed in the specification.

Table 4 discloses, as an example, raw materials of the underlayer and the intermediate layer for one of the manufactured tyres.

**Table 4**

| Raw materials | Underlayer | Intermediate layer |
|---|---|---|
| | (phr) | (phr) |
| SSBR (58% vinyl, 34% styrene) | 50 | - |
| ESBR (16% vinyl, 23% styrene) | - | 40 |
| NR | 30 | 40 |
| BR | 20 | 20 |
| Oil (TDAE) | 20 | 9 |
| Resin, Tg 39 °C | 30 | - |
| Carbon black, N375 | 40 | 60 |
| Zinc oxide (ZnO) | 3 | 3 |
| Stearic acid | 2 | 1 |
| 6PPD (N-(1,3-Dimethylbutyl)-N'-phenyl-p-phenylenediamine) | 1 | 1 |
| TMQ (2,2,4-Trimethyl-1,2-dihydroquinoline) | 1 | 1 |
| Sulphur | 1.40 | 1 |
| CBS (N-Cyclohexyl-2-benzothiazole sulfenamide) | 1.40 | 2.90 |
| ZBEC (Zinc bis(dibenzyldithiocarbamate)) | 0.25 | - |

The rubber mixtures were obtained by means of a stepwise mixing process. A 2L-internal mixer (Krupp Elastomertechnik GK 1,5 laboratory mixer) was used to add the compounds.

In the first step, the polymers were added and mixed for 40 seconds. In the second step, part of the carbon black and chemicals were added and mixed for 60 seconds. In the third step, the rest of the carbon black and oil were added and mixed for 90 seconds or temperature in mixing chamber received 150 degrees.

The final step with curing chemicals was performed at 95°C for 50 seconds.

DMTA samples were vulcanized at 150°C by using a pressure of 150 bar. The optimum vulcanization time of t90 (at 150°C) was determined with a moving die rheometer according to ISO 4664-1:2011. A vulcanization time of t90 plus 5 min was used for the samples.

Position of tan delta max, DMTA at 20°C and at -20°C, and hardness (ShA) at 20°C were determined from the obtained underlayer and intermediate compounds.

DMTA measurements results of Table 5 were done by using tension mode according to standard ISO 4664-1:2011, by using a temperature range from -60°C to 70°C, 10 Hz, static strain 3%, and dynamic strain ± 0,2 %.

**Table 5: DMTA measurements**

| Properties | Underlayer | Intermediate layer |
|---|---|---|
| | | |
| Position of Tan δ maximum (Temperature (°C)) | 3 | -47 |
| E* (20 °C) (MPa) | 6 | 17 |
| E* (-20°C) (MPa) | 411 | 34 |
| E*(-25 °C) (MPa) | 566 | 41 |
| Hardness (22 °C) (ShA) | 48 | 68 |

As can be seen from Table 5, the underlayer as well as the intermediate layer had the desired properties for being able to reduce road wear while improving stability of tyres.

## Claims

1. A stud (100) for improving grip of a tyre (200), the stud (100) comprising
- a body (120) comprising a base flange (140) and a second part (130), the second part (130) being joined to the base flange (140) and extending in a longitudinal direction (Sz) of the stud (100) from the base flange (140), and
- a pin (110) protruding from the second part (130) in the longitudinal direction (Sz) of the stud (100), wherein
- the pin (110) comprises hard metal or ceramic,
- the base flange (140) has a first cross-section on a plane that has a normal in the longitudinal direction (Sz) of the stud, the first cross-section having a first area (A140),
- the pin (110) has a second cross-section on a plane that has a normal in the longitudinal direction (Sz) of the stud, the second cross-section having a second area (A110),
- the pin (110) protrudes a first height (H110) from the second part (130) in the longitudinal direction (Sz), wherein
- a mass of the stud (100) is 0.4 g to 3 g,
**characterized in that**
- a ratio (A140/A110) of the first area (A140) to the second area (A110) is 6.5 to 21,
- the second cross-section has at least one and at most three axes of symmetry (S), and
- a ratio (A140/H110) of the first area (A140) to the first height (H110) is 20 to 50 mm²/mm, wherein
- a mass of the pin (110) is 0.1 g to 0.8 g and
- a greatest one-dimensional measure (dx140) of the first cross-section is 7.5 mm to 10.5 mm.

2. The stud (100) of the claim 1, wherein
- the second part (130) comprises a second flange (134) and a waist (132), the waist (132) connecting the base flange (140) to the second flange (134),
- the pin (110) protrudes from the second flange (134) in the longitudinal direction (Sz) of the stud (100),
- the waist (132) has a third cross-section on a plane that has a normal in the longitudinal direction of the stud, the third cross-section having a third area (A132),
- the second flange (134) has a fourth cross-section on a plane that has a normal in the longitudinal direction of the stud, the fourth cross-section having a fourth area (A134), and
- the fourth area (A134) is greater than the third area (A132).

3. The stud (100) of claim 1 or 2, wherein
- a mass of the stud (100) is 0.5 g to 1.5 g, preferably 0.65 g to 1.1 g.

4. The stud (100) of any of the claims 1 to 3, wherein
- a mass of the pin (110) is 0.15 g to 0.35 g.

5. The stud (100) of any of the claims 1 to 4, wherein
- a height (H100) of the stud, as measured in the longitudinal direction (Sz) of the stud (100), is greater than 9.5 mm.

6. The stud (100) of the claim 5, wherein
- the height (H100) of the stud is 10.0 to 11.0 mm.

7. The stud (100) of any of claims 1 to 6, wherein
- a length of a shortest straight line (dn140) that connects an edge of the first cross-section, an opposite other edge of the first cross-section, and a central point (O) of the first cross-section is 5.0 mm to 9.5 mm.

8. A tyre (200) comprising
- a tread (210) formed by tread blocks (220) such that grooves (230) are arranged between the tread blocks (220) and
- multiple studs (100) according to any of the claims 1 to 7 arranged in the tread (210) such that
- at least the pins (110) of the studs (100) are exposed on the tread (210) and
- an average of protrusions (P100) of the studs (100) from the tread (210) is between 0.6 mm and 2.0 mm, preferably between 0.7 mm and 1.6 mm, and most preferably between 0.8 mm and 1.4 mm.

9. The tyre (200) of the claim 8, wherein
- at least some of the grooves (230) are inclined such that they define a V-shape or a half of a V-shape, the V-shape or the half thereof defining a direction of rotation (R) of the tyre (200) when used driving forwards, the direction of rotation (R) being reverse to the direction to which the V-shape or the half thereof opens.

10. The tyre (200) of the claim 8 or 9, wherein
- at least some of the tread blocks (220) are provided with sipes (240) and/or
- the tread comprises rubber material having a Shore hardness in the range 48 to 59 Sh(A) as measured with durometer type A, at the temperature 23 °C.

11. The tyre (200) of any of the claims 8 to 10
- a central line (CL) of the tread (210) defines a first half (H1) of the tread (210) and a second half (H2) of the tread (210), wherein
- the first half comprises a first number (N1) of studs (100, 100a, 100b) and
- the second half comprises a second number (N2) of studs (100, 100a, 100b) such that
- a ratio (N1/N2) of the first number to the second number is 90 % to 110 %.

12. The tyre (200) of any of the claims 8 to 11, wherein
- the tread (210) has a first width (W210) and a first circumference (C210),
- the tread (210) is provided with a total number (N100) of studs (100), and
- a ratio (N100/(W210×C210)) of the total number (N100) of the studs to the product of the first width (W210) and the first circumference (C210) is more than 5.6 pieces per square-decimetre.

13. The tyre (200) of any of the claims 8 to 12, wherein
- a load index (LI) of the tyre (200) as defined in The European Tyre and Rim Technical Organization Standards Manual (2023) table G.7 is from eighty six to hundred sixteen (from 86 to 116) and
- a road wear of the tyre (200) as measured according to the standard SFS7503:2022:en is less than the value calculatable by the formula -0.000139×LI²+0.0431×LI-1.90.

14. The tyre (200) of any of the claims 8 to 13, comprising
- at least one ply (288),
- at least one metal belt (286, 287),
- a cap layer (23) forming at least part of a running surface of the tyre (200), and
- an underlayer (21) made of a first rubber compound, wherein
a position of a tan delta maximum of the underlayer (21) and/or the first rubber compound is configured to be between -10°C and +15°C,
determined according to ISO 4664-1:2011 in compression with a specimen cooled to -60° C and then heated to 70° C at a rate of 2° C/min while subjected to an oscillatory deformation at 0.6% dynamic strain with 3.0% static strain and a frequency of 10Hz, when using a sample having a diameter of 4.5 mm and a height of 5.0 mm, and at an oscillatory deformation at 0.05% dynamic strain with 0.2% static strain and a frequency of 10Hz, when using a sample having a diameter of 10.0 mm and a height of 10.0 mm;
preferably, the tyre (200) further comprises
- an intermediate layer (22) made of a second rubber compound, the intermediate layer (22) being arranged, at least partially, between the underlayer (21) and the cap layer (23).

## Patentansprüche

1. Bolzen (100) zur Verbesserung der Haftung eines Reifens (200), der Bolzen (100) umfassend
- einen Körper (120), umfassend einen Basisflansch (140) und einen zweiten Teil (130), wobei der zweite Teil (130) mit dem Basisflansch (140) verbunden ist und sich in einer Längsrichtung (Sz) des Bolzens (100) von dem Basisflansch (140) aus erstreckt, und
- einen Stift (110), der aus dem zweiten Teil (130) in Längsrichtung (Sz) des Bolzens (100) herausragt, wobei
- der Stift (110) Hartmetall oder Keramik umfasst,
- der Basisflansch (140) einen ersten Querschnitt auf einer Ebene aufweist, die eine Normale in der Längsrichtung (Sz) des Bolzens aufweist, wobei der erste Querschnitt einen ersten Bereich (A140) aufweist,
- der Stift (110) einen zweiten Querschnitt auf einer Ebene aufweist, die eine Normale in der Längsrichtung (Sz) des Bolzens aufweist, wobei der zweite Querschnitt einen zweiten Bereich (A110) aufweist,
- der Stift (110) in Längsrichtung (Sz) eine erste Höhe (H110) aus dem zweiten Teil (130) herausragt, wobei
- eine Masse des Bolzens (100) 0,4 g bis 3 g beträgt, **dadurch gekennzeichnet, dass**
- ein Verhältnis (A140/A110) zwischen dem ersten Bereich (A140) und dem zweiten Bereich (A110) 6,5 bis 21 beträgt,
- der zweite Querschnitt mindestens eine und höchstens drei Symmetrieachsen (S) aufweist, und
- ein Verhältnis (A140/H110) zwischen dem ersten Bereich (A140) und der ersten Höhe (H110) von 20 bis 50 mm²/mm, wobei-
- eine Masse des Stifts (110) 0,1 g bis 0,8 g beträgt und
- ein größtes eindimensionales Maß (dx140) des ersten Querschnitts 7,5 mm bis 10,5 mm beträgt.

2. Bolzen (100) nach Anspruch 1, wobei
- der zweite Teil (130) einen zweiten Flansch (134) und eine Taille (132) umfasst, wobei die Taille (132) den Basisflansch (140) mit dem zweiten Flansch (134) verbindet,
- der Stift (110) aus dem zweiten Flansch (134) in Längsrichtung (Sz) des Bolzens (100) herausragt,
- die Taille (132) einen dritten Querschnitt auf einer Ebene aufweist, die eine Normale in der Längsrichtung des Bolzens aufweist, wobei der dritte Querschnitt einen dritten Bereich (A132) aufweist,
- der zweite Flansch (134) einen vierten Querschnitt in einer Ebene aufweist, die eine Normale in der Längsrichtung des Bolzens aufweist, wobei der vierte Querschnitt einen vierten Bereich (A134) aufweist, und
- der vierte Bereich (A134) größer ist als der dritte Bereich (A132).

3. Bolzen (100) nach Anspruch 1 oder 2, wobei
- die Masse des Bolzens (100) 0,5 g bis 1,5 g, vorzugsweise 0,65 g bis 1,1 g beträgt.

4. Bolzen (100) nach einem der Ansprüche 1 bis 3, wobei
- die Masse des Stifts (110) 0,15 g bis 0,35 g beträgt.

5. Bolzen (100) nach einem der Ansprüche 1 bis 4, wobei
- eine Höhe (H100) des Bolzens, gemessen in Längsrichtung (Sz) des Bolzens (100), größer als 9,5 mm ist.

6. Bolzen (100) nach Anspruch 5, wobei
- die Höhe (H100) des Bolzens 10,0 bis 11,0 mm ist. .

7. Bolzen (100) nach einem der Ansprüche 1 bis 6, wobei
- eine Länge einer kürzesten geraden Linie (dn140), die eine Kante des ersten Querschnitts, eine gegenüberliegende andere Kante des ersten Querschnitts und einen Mittelpunkt (O) des ersten Querschnitts verbindet, 5,0 mm bis 9,5 mm beträgt.

8. Reifen (200), umfassend
- eine Lauffläche (210), deren Bildung durch Laufflächenblöcke (220) erfolgt ist, sodass Rillen (230) zwischen den Laufflächenblöcken (220) angeordnet sind und
- mehrere Bolzen (100) nach einem der Ansprüche 1 bis 7, die in der Lauffläche (210) angeordnet sind, sodass
- mindestens die Stifte (110) der Bolzen (100) auf der Lauffläche (210) freigelegt sind und
- ein Durchschnitt der Vorsprünge (P100) der Bolzen (100) aus der Lauffläche (210) zwischen 0,6 mm und 2,0 mm, vorzugsweise zwischen 0,7 mm und 1,6 mm, und am meisten bevorzugt zwischen 0,8 mm und 1,4 mm beträgt.

9. Reifen (200) nach Anspruch 8, wobei
- mindestens einige der Rillen (230) so geneigt sind, dass sie eine V-Form oder eine Hälfte einer V-Form definieren, wobei die V-Form oder die Hälfte davon eine Drehrichtung (R) des Reifens (200) definiert, wenn er beim Vorwärtsfahren verwendet wird, wobei die Drehrichtung (R) umgekehrt zu der Richtung ist, in die sich die V-Form oder die Hälfte davon öffnet.

10. Reifen (200) nach Anspruch 8 oder 9, wobei
- mindestens einige der Laufflächenblöcke (220) mit Lamellen (240) bereitgestellt sind und/oder
- die Lauffläche Gummimaterial mit einer Shore-Härte im Bereich von 48 bis 59 Sh(A), gemessen mit Durometer Typ A, bei einer Temperatur von 23 °C aufweist.

11. Reifen (200) nach einem der Ansprüche 8 bis 10,
- eine Mittellinie (CL) der Lauffläche (210) eine erste Hälfte (H1) der Lauffläche (210) und eine zweite Hälfte (H2) der Lauffläche (210) definiert, wobei
- die erste Hälfte eine erste Anzahl (N1) von Bolzen (100, 100a, 100b) umfasst und
- die zweite Hälfte eine zweite Anzahl (N2) von Bolzen (100, 100a, 100b) umfasst, sodass
- ein Verhältnis (N1/N2) der ersten Zahl zur zweiten Zahl 90 % bis 110 % beträgt.

12. Reifen (200) nach einem der Ansprüche 8 bis 11, wobei
- die Lauffläche (210) eine erste Breite (W210) und einen ersten Umfang (C210) aufweist,
- die Lauffläche (210) mit einer Gesamtzahl (N100) von Bolzen (100) bereitgestellt ist, und
- das Verhältnis (N100/(W210xC210)) der Gesamtzahl (N100) der Bolzen zum Produkt aus der ersten Breite (W210) und dem ersten Umfang (C210) mehr als 5,6 Stück pro Quadratdezimeter beträgt.

13. Reifen (200) nach einem der Ansprüche 8 bis 12, wobei
- ein Lastindex (LI) des Reifens (200) gemäß der Definition im Normenhandbuch der Europäischen Organisation für Reifen und Felgen (2023), Tabelle G.7, zwischen sechsundachtzig und einhundertsechzehn (von 86 bis 116) liegt und
- eine nach der Norm SFS7503:2022:en gemessene Abnutzung des Reifens (200) kleiner ist als der nach der Formel -0,000139×LI²+0,0431×LI-1,90 berechenbare Wert.

14. Reifen (200) nach einem der Ansprüche 8 bis 13, umfassend
- mindestens eine Lage (288),
- mindestens ein Metallband (286, 287),
- eine Kappenschicht (23), die mindestens einen Teil einer Lauffläche des Reifens (200) bildet, und
- eine Unterschicht (21) aus einer ersten Gummimischung, wobei
eine Position eines tan delta-Maximums der Unterschicht (21) und/oder der ersten Gummimischung konfiguriert ist, um zwischen -10 °C und +15 °C zu liegen,
bestimmt nach ISO 4664-1:2011 bei Kompression mit einer auf -60 °C gekühlten und dann mit einer Rate von 2 °C/min auf 70 °C erwärmten Probe, während diese einer oszillatorischen Verformung bei 0,6 % dynamischer Dehnung mit 3,0 % statischer Dehnung und einer Frequenz von 10 Hz unterzogen wird, wenn eine Probe mit einem Durchmesser von 4,5 mm und einer Höhe von 5,0 mm verwendet wird, und bei einer oszillatorischen Verformung bei 0,05 % dynamischer Dehnung mit 0,2 % statischer Dehnung und einer Frequenz von 10 Hz, wenn eine Probe mit einem Durchmesser von 10,0 mm und einer Höhe von 10,0 mm verwendet wird;
vorzugsweise umfasst der Reifen (200) ferner Folgendes
- eine Zwischenschicht (22) aus einer zweiten Gummimischung, wobei die Zwischenschicht (22) mindestens teilweise zwischen der Unterschicht (21) und der Kappenschicht (23) angeordnet ist.

## Revendications

1. Crampon (100) pour améliorer l'adhérence d'un pneu (200), le crampon (100) comprenant
- un corps (120) comprenant une bride de base (140) et une seconde partie (130), la seconde partie (130) étant connectée à la bride de base (140) et se prolongeant dans une direction longitudinale (Sz) du crampon (100) à partir de la bride de base (140), et
- une broche (110) faisant saillie depuis la seconde partie (130) dans la direction longitudinale (Sz) du crampon (100), dans lequel
- la broche (110) comprend du métal dur ou de la céramique,
- la bride de base (140) a une première section transversale sur un plan qui a une normale dans la direction longitudinale (Sz) du crampon, la première section transversale ayant une première surface (A140),
- la broche (110) a une deuxième section transversale sur un plan qui a une normale dans la direction longitudinale (Sz) du crampon, la deuxième section transversale ayant une deuxième surface (A110),
- la broche (110) fait saillie depuis une première hauteur (H110) de la seconde partie (130) dans la direction longitudinale (Sz), dans lequel
- une masse du crampon (100) est de 0,4 g à 3 g, **caractérisé en ce que**
- un rapport (A140/A110) de la première surface (A140) à la deuxième surface (A110) est de 6,5 à 21,
- la deuxième section transversale a au moins un et au plus trois axes de symétrie (S), et
- un rapport (A140/H110) de la première surface (A140) à la première hauteur (H110) est de 20 à 50 mm²/mm, dans lequel
- une masse de la broche (110) est de 0,1 g à 0,8 g et
- une plus grande mesure unidimensionnelle (dx140) de la première section transversale est de 7,5 mm à 10,5 mm.

2. Crampon (100) selon la revendication 1, dans lequel
- la seconde partie (130) comprend une seconde bride (134) et une taille (132), la taille (132) connectant la bride de base (140) à la seconde bride (134),
- la broche (110) fait saillie depuis la seconde bride (134) dans la direction longitudinale (Sz) du crampon (100),
- la taille (132) a une troisième section transversale sur un plan qui a une normale dans la direction longitudinale du crampon, la troisième section transversale ayant une troisième surface (A132),
- la seconde bride (134) a une quatrième section transversale sur un plan qui a une normale dans la direction longitudinale du crampon, la quatrième section transversale ayant une quatrième surface (A134), et
- la quatrième surface (A134) est plus grande que la troisième surface (A132).

3. Crampon (100) selon la revendication 1 ou 2, dans lequel
- une masse du crampon (100) est de 0,5 g à 1,5 g, de préférence de 0,65 g à 1,1 g.

4. Crampon (100) selon l'une quelconque des revendications 1 à 3, dans lequel
- une masse de la broche (110) est de 0,15 g à 0,35 g.

5. Crampon (100) selon l'une quelconque des revendications 1 à 4, dans lequel
- une hauteur (H100) du crampon, telle que mesurée dans la direction longitudinale (Sz) du crampon (100), est supérieure à 9,5 mm.

6. Crampon (100) selon la revendication 5, dans lequel la hauteur (H100) du crampon et de 10,0 à 11,0 mm.

7. Crampon (100) selon l'une quelconque des revendications 1 à 6, dans lequel
- une longueur d'une ligne droite la plus courte (dn140) qui connecte un bord de la première section transversale, un autre bord opposé de la première section transversale et un point central (O) de la première section transversale est de 5,0 mm à 9,5 mm.

8. Pneu (200) comprenant
- une bande de roulement (210) formée par des blocs de bande de roulement (220) de sorte que des rainures (230) sont agencées entre les blocs de bande de roulement (220) et
- de multiples crampons (100) selon l'une quelconque des revendications 1 à 7 agencés dans la bande de roulement (210) de sorte que
- au moins les broches (110) des crampons (100) sont exposées sur la bande de roulement (210) et
- une moyenne de saillies (P100) des crampons (100) de la bande de roulement (210) est comprise entre 0,6 mm et 2,0 mm, de préférence entre 0,7 mm et 1,6 mm, et le plus préférablement entre 0,8 mm et 1,4 mm.

9. Pneu (200) selon la revendication 8, dans lequel
- au moins certaines des rainures (230) sont inclinées de sorte qu'elles définissent une forme en V ou une moitié d'une forme en V, la forme en V ou la moitié de celle-ci définissant une direction de rotation (R) du pneu (200) lorsqu'il est utilisé en marche avant, la direction de rotation (R) étant inverse à la direction vers lequel s'ouvre la forme en V ou la moitié de celle-ci.

10. Pneu (200) selon la revendication 8 ou 9, dans lequel
- au moins certains des blocs de bande de roulement (220) sont pourvus de lamelles (240) et/ou
- la bande de roulement comprend un matériau en caoutchouc ayant une dureté Shore comprise entre 48 et 59 Sh(A) telle que mesurée avec un duromètre de type A, à la température de 23 °C.

11. Pneu (200) selon l'une quelconque des revendications 8 à 10
- une ligne centrale (CL) de la bande de roulement (210) définit une première moitié (H1) de la bande de roulement (210) et une seconde moitié (H2) de la bande de roulement (210), dans lequel
- la première moitié comprend un premier nombre (N1) de crampons (100, 100a, 100b) et
- la seconde moitié comprend un second nombre (N2) de crampons (100, 100a, 100b) de sorte que
- un rapport (N1/N2) du premier nombre au second nombre est de 90 % à 110 %.

12. Pneu (200) selon l'une quelconque des revendications 8 à 11, dans lequel
- la bande de roulement (210) a une première largeur (W210) et une première circonférence (C210),
- la bande de roulement (210) est pourvue d'un nombre total (N100) de crampons (100), et
- un rapport (N100/(W210xC210)) du nombre total (N100) des crampons au produit de la première largeur (W210) et de la première circonférence (C210) est supérieur à 5,6 pièces par décimètre carré.

13. Pneu (200) selon l'une quelconque des revendications 8 à 12, dans lequel
- un indice de charge (LI) du pneu (200) tel que défini dans le tableau G.7 dans « The European Tyre and Rim Technical Organization Standards Manual » (2023), est compris entre quatre-vingt-six et cent seize (de 86 à 116) et
- une usure de la route du pneu (200) telle que mesurée selon la norme SFS7503:2022:en est inférieure à la valeur calculable par la formule -0,000139xLI²+0,0431xLI-1,90.

14. Pneu (200) selon l'une quelconque des revendications 8 à 13, comprenant
- au moins une nappe (288),
- au moins une courroie métallique (286, 287),
- une couche de recouvrement (23) formant au moins une partie d'une surface de roulement du pneu (200), et
- une sous-couche (21) constituée d'un premier composé de caoutchouc, dans lequel
une position d'un maximum de tan delta de la sous-couche (21) et/ou du premier composé de caoutchouc est configurée pour être comprise entre -10 °C et +15 °C, déterminée selon la norme ISO 4664-1:2011 en compression avec une éprouvette refroidie à -60 °C, puis chauffée à 70 °C à une vitesse de 2 °C/min, tout en étant soumise à une déformation oscillatoire avec une déformation dynamique de 0,6 %, une déformation statique de 3,0 % et une fréquence de 10 Hz lors de l'utilisation d'un échantillon ayant un diamètre de 4,5 mm et une hauteur de 5,0 mm, et à une déformation oscillatoire avec une déformation dynamique de 0,05 %, une déformation statique de 0,2 % et une fréquence de 10 Hz lors de l'utilisation d'un échantillon ayant un diamètre de 10,0 mm et une hauteur de 10,0 mm ;
de préférence, le pneu (200) comprend également
- une couche intermédiaire (22) constituée d'un second composé de caoutchouc, la couche intermédiaire (22) étant agencée, au moins partiellement, entre la sous-couche (21) et la couche de recouvrement (23).
